(19) Europäisches Patentamt
European Patent Office
Office européen des brevets

(11) EP 4 628 947 A1

# (12) EUROPEAN PATENT APPLICATION

(43) Date of publication:
**08.10.2025 Bulletin 2025/41**

(21) Application number: **24305526.6**

(22) Date of filing: **04.04.2024**

(51) International Patent Classification (IPC):
***G02B 1/115*** *(2015.01)* ***G02B 5/30*** *(2006.01)*
***G02C 7/10*** *(2006.01)* ***G02C 7/12*** *(2006.01)*

(52) Cooperative Patent Classification (CPC):
**G02B 5/3058; G02B 1/115; G02C 7/12**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **ESSILOR INTERNATIONAL**
**94220 Charenton-Le-Pont (FR)**

(72) Inventors:
- **DING, Xingzhao**
  **Singapore 339338 (SG)**
- **BHANGALE, Sunil Madhukar**
  **Singapore 689682 (SG)**

(74) Representative: **Jacobacci Coralis Harle**
**32, rue de l'Arcade**
**75008 Paris (FR)**

## (54) OPTICAL ARTICLE HAVING A POLAR COATING, AND ITS MANUFACTURING

(57) The invention relates to an optical article comprising at least:
(a) a base element having a front main surface and a rear main surface,
(b) a first interferential multilayered coating, defined as IF1, deposited onto at least a region of the front main surface of said base element, comprising at least one layer having a low refractive index which is lower than 1.55, and at least one layer having a high refractive index which is equal to or higher than 1.55,
(c) a polarizing wire-grid containing coating, defined as IF2, comprising at least one electrically conductive layer, at least one layer having a refractive index which is lower than 1.55 and at least one layer having a refractive index which is equal to or higher than 1.55,
wherein said IF2 is deposited on the base element in a predetermined pattern of parallel nanostructured lines protruding from the front surface of the base element so that linear nanogrooves are formed between the different adjacent parallel nanostructured lines and wherein IF1 is at least coated onto said linear nanogrooves,
characterized in that for an angle of incidence of 15°, IF1 and IF2 respectively have mean light reflection factors in the visible region $R_V(_{IF1})$ and $R_V(_{IF2})$ such that I $R_V(_{IF1})$-$R_V(_{IF2})$| ≤ 0.8 %, preferably ≤ 0.7 %, in particular ≤ 0.6 %, typically ≤ 0.5 %, such as ≤ 0.2 %.,
wherein the refractive indexes being expressed at 25°C at a wavelength of 550 nm,
and wherein the mean light reflection factors in the visible region Rv is defined in the ISO 13666:1998 Standard and is measured in accordance with the ISO 8980-4.

Fig.1

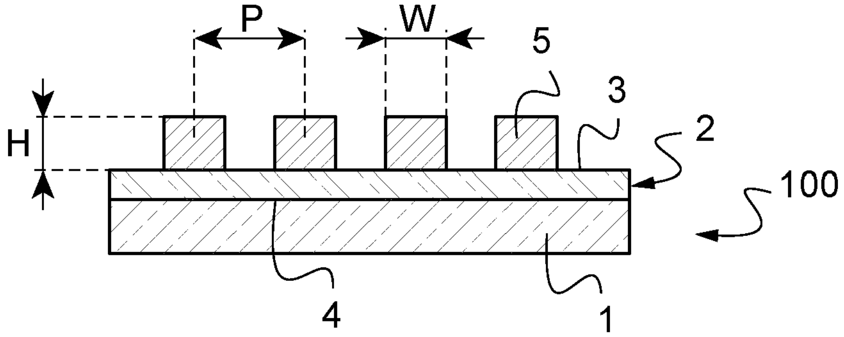


EP 4 628 947 A1

## Description

### TECHNICAL FIELD OF THE INVENTION

The invention relates to an optical article comprising a base element, such as a substrate, having a front main face and a rear main surface, the front main face being coated at least in part with a specific polarizing wire-grid containing coating and at least in part with an interferential multilayered coating. This combination of coatings enables to and/or is configured to provide both high transmission polarization efficiency, while having controlled reflectance characteristics, such as anti-reflective or mirror properties. The optical article may especially be an ophthalmic lens, in particular a spectacle lens.

The invention also refers to methods for manufacturing such an optical article.

### BACKGROUND INFORMATION AND PRIOR ART

Polarizing films block glare caused by light reflection of specular surfaces. Polarizing films have been widely employed, for example, in liquid crystal displays of, e.g., pocket electric calculators, watches, word processors, liquid crystal printers, liquid crystal color TV's, various instruments and automotive instrument panels. Further, they are inserted into laminated glass to form an anti-glare film for, e.g., sunglasses or ski goggles. Polyvinyl alcohol (PVOH) films are commonly used in polarized lens products due to their excellent polar function. However, polarized PVOH films are unable to filter wavelengths of the incoming light that can have detrimental effects on general eye health. Iodine and/or dichroic dyes are used in PVOH films to filter broad ranges of electromagnetic radiation but provide no selective control over wavelength that can damage the eye including blue light at 415-455 nm and/or near infrared (NIR) at 700-1400 nm.

Another type of polarizing film has been developed in the past decades for polarizing light or separating orthogonal polarization orientations of light, such as Wire-Grid Polarizers (WGP) supported by a transparent substrate.

In particular, WGP coating comprises an array of parallel conducting fine wires. These parallel fine wires are first characterized by a period or pitch "p" (i.e., center-to-center spacing between two neighboring wires) which is generally less than half the wavelength of the incident light and which is typically less than 150 nm in order to provide adequate bandwidth to cover the visible light spectrum. Indeed, when the period is much shorter than the wavelength, the wire grid functions as a polarizer that reflects electromagnetic radiation polarized parallel to the fine wires and transmits radiation of the orthogonal polarization. The fine wires are also characterized by a width "w", corresponding to 10 to 90% of the period "p" and a height "H" (i.e., which corresponds to the thickness of the fine wires). Generally, the fine wires are formed of a conductive material.

A common WGP may act as follows. For a beam of light produced by a light source which is incident on the polarizer at an angle $\theta$ from normal, with the plane of incidence orthogonal to the conductive elements, the wire grid polarizer WGP divides notably this beam into a specularly reflected component and a non-diffracted, transmitted component. Using the normal definitions for S and P polarization, the light with S polarization has the polarization vector orthogonal to the plane of incidence, and thus parallel to the fine wires. Conversely, light with P polarization has the polarization vector parallel to the plane of incidence and thus orthogonal to the fine conductive wires. In general, a wire grid polarizer WGP will reflect light with its electric field vector parallel to the wires of the grid, and transmit light with its electric field vector perpendicular to the wires of the grid, especially when the plane of incidence is perpendicular to the wires of the grid. The geometry chosen here is for clarity of illustration. Ideally, the wire grid polarizer will function as a perfect mirror for one polarization of light, such as the S polarized light, and will be perfectly transparent for the other polarization, such as the P polarized light. In practice, however, even the most reflective metal wires used as mirrors absorb some fraction of the incident light and reflect only 90% to 95%, and plain glass does not transmit 100% of the incident light due to surface reflections.

The document CN 115903270 describes a film -coated polarized lens. This lens comprises a substrate having a front main surface and a rear main surface, both of these surfaces are coated with an abrasion-resistant coating, which is itself coated with a polarizing coating. This polarizing coating is obtained:

- firstly, by sequentially deposited by vacuum sputtering of stack of several layers of materials, such as 8-20 nm of metal chromium layer, 35-45 nm of silicon dioxide layer, 60-110 nm of titanium oxide layer, 35-45 nm of silicon dioxide layer, 100-180 nm of titanium oxide layer and 60-100 nm of silicon dioxide layer;
- secondly by laser engraving, from the outermost layer of the stack thus formed, so as to form a pattern of parallel grooves into the thickness of the stack. It is indicated that these grooves have a width of 20 nm and the distance between two adjacent grooves is 20 nm.

However, the stack of the document seems not based on the principle of interferential antireflective (AR) or mirror design. For the embodiment wherein the stack comprises one layer of Cr, directly coted onto the abrasion-resistant coating, it is not clear if the Cr layer is considered in the interferential stack. For the embodiments comprising four layers of Cr, all the Cr layers are of the same thickness (20-40 nm) and all the inner $SiO_2$ layers are of the same thickness (5-15nm). This is not a normal interferential AR/Mirror design.

In addition, this document is totally mute about the cutting depth into the thickness of the stack during the engraving step. Therefore, the skilled person cannot understand which layers are removed by the laser engraving. Furthermore, if the cutting depth is just over the innermost Cr layer, the laser will certainly cut at least a little into the thickness of this innermost Cr layer and hence will change its thickness/height, or will certainly cut into the abrasion-resistant coating or into the substrate. Moreover, whatever the desired cut, the engraving depth can hardly be even and uniform. Therefore, the thickness of the remaining layers of the stack that have not been removed by the laser engraving is not uniform and reproductible between two lenses that are supposed to be identical. Thus, this lens thus obtained by the method described in this document is not repeatable in production line. Finally, no matter what the cutting depth is, the reflection properties from the bottom surface of the laser engraving trenches can hardly be close to those from the top surface of the coatings.

Moreover, wire grid polarizer WGP comprising an array of parallel conducting fine wires such as defined above and such as obtained by laser engraving as described in the document CN 115903270 is prone to damage, oxidization and contamination, which could raise concern on environmental reliability and difficulty for application on ophthalmic lenses.

Also, for the light component with electric field vector perpendicular to the metal wires, the WGPs behave like a dielectric, but for the light component with electric field vector parallel to the wires, the WGPs behave like a bulky metal with a very high shining reflection. It has been observed by the Applicant, that the lamination of WGP films on ophthalmic lenses provides polar lens prototype having both a very strong forward reflection and backward reflection, which is visually uncomfortable.

Hence, an object of the present invention is thus to propose a new optical article and a new method of manufacturing of this optical article which avoid, at least in part, the aforementioned drawbacks.

Indeed, there is still a need to provide novel polarizing coatings having either an antireflective property or a reflective property (i.e., mirror) at least in the visible region, while having a good polarization efficiency versus the interferential coatings of the prior art.

In addition, there is also a need for providing novel polarizing coatings having either an antireflective property or a reflective property (i.e., mirror) at least in the visible region for an optical article, such as an ophthalmic lens, having a predetermined perceived color (such as hue and Chroma C*) that is repeatable in production line.

There is also a need to provide novel polarizing coatings having at the same time robustness properties and aesthetic appearance (i.e.: predetermined perceived color).

The term "robustness" of a polarizing coating in the present invention is defined as the ability of this one to resist change despite the variations induced by its manufacture process. These variations depend, for instance, on the type of substrate which is used, the setting of the manufacturing machine (temperature schedule, appropriate time, setting of the electron gun...) and/or its usage mode, the replacement of said manufacturing machine by another one. The robustness is also essential for a lens having a mirror coating (i.e.: reflective coating), usually used for sunglass. Indeed, for mirror coating (as well as for antireflective coating), the variability of the perceived color from one lens to another lens may be problematic especially in a pair of spectacles, such as sunglasses. Wherein two separate lenses are placed next to each other.

## SUMMARY OF THE INVENTION

The Applicant sought to develop a new transparent optical article comprising an organic or mineral base element bearing a polarization stack, preferably a lens, and more preferably an ophthalmic lens for eyeglasses, said polarization stack having improved polarization efficiency, while having suitable optical and colorimetric characteristics, while being easy to implement.

For that purpose, the Applicant developed a new and atypical structure for optical article comprising at least:

(a) a base element having a front main surface and a rear main surface,
(b) a first interferential multilayered coating, defined as IF1, deposited onto at least a region of the front main surface of said base element, comprising at least one layer having a low refractive index which is lower than 1.55, and at least one layer having a high refractive index which is equal to or higher than 1.55,
(c) a polarizing wire-grid containing coating, defined as IF2, comprising at least one electrically conductive layer, at least one layer having a refractive index which is lower than 1.55 and at least one layer having a refractive index which is equal to or higher than 1.55,

wherein said IF2 is deposited on the base element in a predetermined pattern of parallel nanostructured lines protruding from the front surface of the base element so that linear nanogrooves are formed between the different adjacent parallel nanostructured lines and wherein IF1 is at least coated onto said linear nanogrooves, characterized in that for an angle of incidence of 15°, IF1 and IF2 respectively have mean light reflection factors in the visible region $Rv_{(IF1)}$ and $Rv_{(IF2)}$ such that $|Rv_{(IF1)}- Rv_{(IF2)}| \leq 0.8$ % , preferably ≤ 0.7 %, in particular ≤ 0.6 %, typically ≤ 0.5 %, such as ≤ 0.2 %.,
wherein the refractive indexes being expressed at 25°C at a wavelength of 550 nm,
and wherein the mean light reflection factors in the visible region Rv is defined in the ISO 13666:1998 Standard and is measured in accordance with the ISO 8980-4.

Indeed, thanks to its characteristics and especially on the one hand, the alternation of IF1 at least into the nanogrooves and IF2 protruding from the front surface of the base element according to a predetermined pattern, and on the other hand, the specific structure of IF2 that is to say wherein the electrically conductive layer is part of an interferential coating, the optical article of the invention allows to provide an excellent polarization efficiency, while being less prone to damage, oxidization and contamination. In addition, these specific characteristics allow to obtain an optical article having suitable polarizing efficiency with either antireflective properties or reflective properties. In addition, the very close Rv, hue, and C* values between $Rv_{(IF1)}$ and $Rv_{(IF2)}$, between $h_{IF1}$ and $h_{IF2}$, and between $C^*_{IF1}$ and $C^*_{IF2}$ enable to obtain an optical article which appears uniform for an observer, i.e., the parallel nanostructured lines protruding of IF2 are not visible especially under normal lighting conditions.
As it will be shown below, the optical article according to the invention is easy to implement and is reproducible that is particularly important for mass production.
According to a first embodiment, said IF2 is composed of IF1 and a polarizing wire-grid coating, defined as PWG, said PWG is coated in direct contact above IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55.
According to a second embodiment, said IF2 is composed of IF1 and a polarizing wire-grid coating, defined as PWG, said PWG is coated in direct contact under IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55.
The invention also refers to a method for manufacturing an optical article according to the first embodiment described above, comprising the successive following steps:

(10) providing the base element;
(11) depositing onto said base element IF1;
(12) covering the base element coated with IF1 with a removable mask having a complementary pattern as compared to the one of PWG;
(13) depositing PWG;
(14) removing the removable mask.

The invention also refers to a method for manufacturing an optical article according to the second embodiment described above, comprising the successive following steps:

(20) providing the base element;
(21) covering the base element with a removable mask having a complementary pattern as compared to the one of PWG;
(22) depositing PWG;
(23) removing the removable mask,
(24) depositing IF1.

The two methods according to the invention enable to form an optical article with a high robustness, while being easily repeatable in production line.

## BRIEF DESCRIPTION OF THE DRAWINGS

For a more complete understanding of the description provided herein and the advantages thereof, reference is now made to the brief descriptions below, taken in connection with the accompanying drawings and detailed description, wherein like reference numerals represent like parts.

FIG. 1 is a schematic section view of an optical article according to an embodiment of the invention, especially named after the first embodiment);

FIG. 2 is a schematic section view of an optical article according to another embodiment of the invention (especially named after the second embodiment);

FIG. 3 is a schematic section view of an optical article according to another embodiment of the invention (especially named after the third embodiment);FIG.4 is a top view showing the different steps so as to obtain an optical article according to the invention, especially an optical article such as illustrated on Fig.1;

FIG. 5 is a top view showing the different steps so as to obtain another optical article according to the invention, especially an optical article such as illustrated on Fig.2;

FIG.6 is a schematic diagram showing a top view of a front main surface of an optical lens according to the first embodiment, wherein said optical lens is coated with an alternation of a pattern of parallel nanostructured lines protruding from said front surface composed of IF1 and IF2, and the remaining part, also named hereafter linear nanogrooves, is coated with IF1 only.

## DETAILED DESCRIPTION OF THE INVENTION

### A) Definitions

The terms "comprise" (and any grammatical variation thereof, such as "comprises" and "comprising"), "have" (and any grammatical variation thereof, such as "has" and "having"), "contain" (and any grammatical variation thereof, such as "contains" and "containing"), and "include" (and any grammatical variation thereof, such as "includes" and "including") are open-ended linking verbs. They are used to specify the presence of stated features, integers, steps or components or groups thereof, but do not preclude the presence or addition of one or more other features, integers, steps or components or groups thereof. As a result, a method, or a step in a method, that "comprises," "has," "contains," or "includes" one or more steps or elements possesses those one or more steps or elements, but is not limited to possessing only those one or more steps or elements.

Unless otherwise indicated, all numbers or expressions referring to quantities of ingredients, ranges, reaction conditions, etc. used herein are to be understood as modified in all instances by the term "about."

Also, unless otherwise indicated, the indication of an interval of values « from X to Y » or "between X to Y", according to the present invention, means as including the values of X and Y.

We mean an ophthalmic article defined by, but not exclusive of corrective lenses, non-corrective lenses, contact lenses, intra-ocular lenses, magnifying lenses, protective lenses, and visors containing photochromic compounds within a coating, the lens material, a film, or any adjacent layer.

As used herein, "a base element" can consist in an optical, such as an ophthalmic, substrate or in a support film of optical quality to be fixed on an optical/ophthalmic substrate thanks to an adhesive such as a pressure-sensitive adhesive of optical quality (PSA layer) (i.e.: laminate).

As used herein, "interferential coating" means a coating, generally composed of interferential thin layers and comprises at least one layer having a low refractive index which is lower than 1.55, defined as "LI layer", and at least one layer having a high refractive index which is equal to or higher than 1.55, defined as "HI layer.

In the present application, when an optical lens comprises one or more coatings onto the surface thereof, the expression "to deposit a layer, a sheet or a coating onto the article" is intended to mean that a layer, a sheet or a coating is deposited onto the external (exposed) surface of the outer coating of the article, that is to say its coating that is the most distant from the substrate.

Unless otherwise indicated, a coating, a layer or a sheet, that is said to be "on" a substrate/base element or deposited "onto" a substrate/base element" is defined as a coating, a layer or a sheet, which (i) is positioned above the substrate/base element, (ii) is not necessarily in contact with the substrate/base element, that is to say one or more intermediate coatings/sheets may be arranged between the substrate/base element and the coating or sheet in question, and (iii) does not necessarily completely cover the substrate/base element.

In a preferred embodiment, the coating on a substrate/base element or deposited onto a substrate/base element is in direct contact with this substrate.

When "a layer/sheet 1 is lying under a layer 2/sheet 2", it is intended to mean that layer/sheet 2 is more distant from the substrate than layer 1/sheet 1 respectively.

By outermost layer or sheet of the interferential coating, it is meant the layer or sheet of the interferential coating which is the furthest from the substrate.

By innermost layer or sheet of the interferential coating, it is meant the layer or sheet of the interferential coating which is the closest to the substrate.

By inner layer/sheet of the interferential coating, it is meant any layer/sheet of the interferential coating except for the outermost layer/sheet of said interferential coating.

Also, unless stated otherwise, all thicknesses disclosed in the present application relate to physical thicknesses.

As used herein, a layer of the interferential coating is defined as having a thickness higher than or equal to 1 nm. Thus, any layer having a thickness lower than 1 nm will not be considered when counting the number of layers in the reflective coating. A sub-layer (having generally a physical thickness of 150 nm) is also not considered when counting the number of layers of the interferential coating.

Unless otherwise specified, the refractive indexes referred to in the present application are expressed at 25 °C at a wavelength of 550 nm.

As used herein, the rear (or the inner or Concave or CC) face of the base element/substrate is intended to mean the face which, when using the article, is the nearest from the wearer's eye. It is generally a concave face. On the contrary, the front face of the substrate/base element (or Convex or CX), is the face which, when using the article, is the most distant from the wearer's eye. It is generally a convex face.

Also, as used herein, a "transparent substrate/base element" is understood to be transparent, when the observation of an image through said substrate is perceived with no significant loss of contrast, that is, when the formation of an image through said substrate is obtained without adversely affecting the quality of the image.

The colorimetric coefficients of the optical article of the invention in the international colorimetric system CIE L*a*b* (1976) (such as the Chroma C* and the hue "h") are calculated between 380 and 780 nm, taking the standard illuminant D 65 and the observer into account (angle of 10°). The observer is a "standard observer" as defined in the international colorimetric system CIE L*a*b*. Indeed, in the CIE L*a*b* space, it is possible to express not only overall variations in color, but also in relation to one or more of the parameters L*, a* and b*. This can be used to define new parameters and to relate them to the attributes of the visual sensation. Clarity, related to luminosity, is directly represented by the value of L*. Chroma: $C^* = (a^{*2} + b^{*2})^{1/2}$ defines the chromaticness. The angle of hue: h = arctan (b*/a*) (expressed in degrees); related to hue.

According to the invention, the colorimetric measurements (in reflection) of the face coated with the interferential multilayered coating of the invention (convex/front face): reflection factors Rv, hue angle h, and chroma C* in the international colorimetric CIE (L*, a*, b*) space were carried out with a Zeiss spectrophotometer, taking into account the standard illuminant D65, and the standard observer 10° (for h and C*). They are provided for an angle of incidence of 15° or 35°

According to the invention, the "angle of incidence (symbol $\theta$)" is the angle formed by a ray light incident on an ophthalmic lens surface and a normal to the surface at the point of incidence. The ray light is for instance an illuminant light source, such as the standard illuminant D65 as defined in the international colorimetric CIE L*a*b* (1976). Generally, the angle of incidence changes from 0° (normal incidence) to 90° (grazing incidence). The usual range for angle of incidence is from 0° to 75° and is typically 15° for the present invention.

The optical characteristics comprise at least the mean light reflection factor in the visible region $R_v$, also named the "luminous reflectance".

Herein, the "luminous reflectance" noted $R_v$, is such as defined in the ISO 13666:1998 Standard, and measured in accordance with the ISO 8980-4, i.e., this is the weighted spectral reflection average over the whole visible spectrum between 380 and 780 nm. $R_v$ is usually measured for an angle of incidence lower than 17°, typically of 15°, but can be evaluated for any angle of incidence. Especially, for the current invention, Rv was measured only for IF1 and IF2, separately and without patterning. In other words, the means light reflection Rv are measured for a base element coated with IF1, or for a base element coated with IF2 without patterning.

According to the invention, when the mean light reflection factor in the visible region $R_v$ onto the front and/or rear main face of the optical article is strictly higher than 2.5%, more preferably higher than 3%, even more preferably higher than 5%, this means that the multilayered interferential coating is able to provide a mirror behaviour onto the front or rear main surface of the optical article respectively. Especially, a "mirror behaviour" enables to provide a reduction in transmitted visible, ultra-violet and/or infrared light. In other words, an optical article having on its front main face a mirror behaviour reflects at least a part of light arriving on said surface. Said mirror behaviour increases light reflection at the article/air interface over a determined portion of the spectrum. Reflection may be in the ultraviolet spectrum or in the visible spectrum or in the infrared spectrum.

According to the invention, when the mean light reflection factor in the visible region $R_v$ onto the front and/or rear main face of the optical article is equal to or lower than 2.5%, this means that the multilayered interferential coating is able to provide an antireflective behaviour onto the front and/or rear main surface of the optical article respectively.

Also, as used herein, let us consider that IF2 corresponds to the coating comprising the polarizing wire-grid coating deposited on the base element in a pattern of parallel nanostructured lines protruding from the front surface of the base element, and IF1 corresponds to the first interferential coating such as defined in the set of claims (does not comprise any electrically conductive layers) which is deposited on the base element in a complementary pattern as the one defined above (i.e.: corresponding to the remaining part of the main surface of the base element).

Let us denote $\Delta E$ the relative difference of reflection color between IF1 and IF2 which is measured as follows:

$$\Delta E = \frac{\sqrt{(L_{IF1} - L_{IF2})^2 + (a_{IF1} - a_{IF2})^2 + (b_{IF1} - b_{IF2})^2}}{\frac{C_{IF1} - C_{IF2}}{2}}$$

where $L_{IF1}$, $L_{IF2}$, $a_{IF1}$, $a_{IF2}$, $b_{IF1}$, $b_{IF2}$, $C_{IF1}$, $C_{IF2}$ are the theoretical values of L*, a*, b*, C* of IF1 orIF2, respectively, according to the international colorimetric CIE L*a*b* for an incident angle of 15°, taking the standard illuminant D65 into account.

Also let us denote ΔR*v*(*rel*) the relative difference of Rv between IF1 and IF2 which is measured as follows:

$$\Delta Rv(rel) = |Rv_{IF1} - Rv_{IF2}|/((Rv_{IF1} + Rv_{IF2})/2)$$

where $Rv_{IF1}$ and $Rv_{IF2}$ are the mean light reflection factors of IF1 and IF2, respectively.

In addition, as used herein, the absolute difference of Rv, defined as ΔR*v*(*abs*)between IF1 and IF2 which is measured as follows:

$$\Delta Rv(abs) = |Rv_{(IF1)} - Rv_{(IF2)}|$$

The term "robustness" of an optical article, such as an ophthalmic lens, in the present invention is defined as the ability of this lens to resist change despite the variations induced by its manufacture process. These variations depend, for instance, on the type of substrate/base element, which is used, the setting of the manufacturing machine (temperature schedule, appropriate time, setting of the electron gun...) and/or its usage mode, the replacement of said manufacturing machine by another one.

In addition, the polymerization efficiency, defined as PE(%) is calculated as follows:

$$PE(\%) = T_{TM} / (T_{TM} + T_{TE})$$

wherein $T_{TM}$ is the transmittance of TM which refers to the light component of which electric-field vector is perpendicular to the parallel nanostructured lines of IF2 and $T_{TE}$ is the transmittance of TE, TE referring to light component of which electric-field vector is parallel to the parallel nanostructured lines of IF2.

## B) <u>Optical article according to the invention</u>

As mentioned-above, the Applicant has developed a transparent optical article, especially an ophthalmic lens such as spectacle lens, comprising a base element, such as a substrate in mineral or organic glass comprising at least an interferential multilayered coating, said transparent optical article having improved polarization efficiency, while being comfortable for the user and to do so without compromising not only the mechanical of the optical article, its cosmetic appearance, but also the economic and/or industrial feasibility of its manufacture.

The optical article is such as defined in the set of claims and comprises a base element having a front main surface and a rear main surface, the front main surface comprising, from a top view, an alternation of ribs composed of at least a polarizing wire-grid containing coating, defined as IF2and of nanogrooves composed of an interferential multilayered coating, defined as IF1. Especially IF1 does not comprise any electrically conductive layers such as defined in IF2 and hence is different from IF2.

### <u>*B.1 The base element/substrate*</u>

The optical article according to the present invention comprises a base element.

According to one embodiment, this base element can be a laminate, that is to say a support film of optical quality to be fixed on an optical/ophthalmic substrate thanks to an adhesive such as a pressure-sensitive adhesive of optical quality (PSA layer). Preferably, the support film is made of cellulose triacetate (TAC) and has a thickness of at least 40 microns, preferably a thickness in the range of 40 μm to 300 μm inclusive and preferably a thickness of 80 to 190 μm. Materials of the support film may be selected from the group of films made of cellulose triacetate (TAC), cellulose acetate butyrate (CAB), polycarbonate (PC), poly(ethylene terephthalate) (PET), poly(methylmethacrylate) (PMMA), urethane polymer (TPU), cyclo olefin copolymer (COC), polyester copoblock amide (like Pebax) and Polyimides.

According to another embodiment (described hereafter), the base element can consist in an ophthalmic substrate of a transparent optical article, such as a lens or lens blank, and more preferably an ophthalmic lens or lens blank.

Generally speaking, the interferential coating of the optical article according to the invention may be deposited onto any substrate, and preferably onto organic lens substrates, for example a thermoplastic or thermosetting plastic material.

Thermoplastic may be selected from, for instance: polyamides; polyimide; polysulfones; polycarbonates and copolymers thereof; poly(ethylene terephthalate) and polymethylmethacrylate (PMMA).

Thermoset materials may be selected from, for instance: cycloolefin copolymers such as ethylene/norbornene or ethylene/cyclopentadiene copolymers ; homo- and copolymers of allyl carbonates of linear or branched aliphatic or aromatic polyols, such as homopolymers of diethylene glycol bis(allyl carbonate) (CR 39®) ; homo- and copolymers of (meth)acrylic acid and esters thereof, which may be derived from bisphenol A ; polymer and copolymer of thio(meth)acrylic acid and esters thereof, polymer and copolymer of allyl esters which may be derived from Bisphenol A or phthalic acids and allyl aromatics such as styrene, polymer and copolymer of urethane and thiourethane, polymer and copolymer of epoxy, and polymer and copolymer of sulphide, disulfide and episulfide, and combinations thereof.

As used herein, a (co)polymer is intended to mean a copolymer or a polymer. As used herein, a (meth)acrylate is intended to mean an acrylate or a methacrylate. As used herein, a polycarbonate (PC) is intended to mean either homopolycarbonates or copolycarbonates and block copolycarbonates.

Homopolymers of diethylene glycol bis(allyl carbonate) (CR 39®), allylic and (meth)acrylic copolymers, having a refractive index between 1.54 and 1.58, polymer and copolymer of thiourethane, polycarbonates are preferred.

In particular, the base element recommended for the invention is a substrate selected from materials obtained by (co)polymerization of di(ethylene glycol) bis(allyl carbonate) and may correspond to the CR-39® ESSILOR ORMA® lenses.

As it will be shown hereafter, the substrate/base element may be coated with one or more functional coatings prior to depositing the antireflective coating of the invention. These functional coatings traditionally used in optics may be, without limitation, an impact-resistant primer layer, an abrasion-resistant coating and/or a scratch-resistant coating, a polarizing coating, a photochromic coating or a tinted coating. In the following a substrate means either a bare substrate or such a coated substrate.

Preferably, the substrate/base element and the optional abrasion-resistant coating and/or a scratch-resistant coating generally coated onto said substrate have a similar/close refractive index so as to avoid fringes or cosmetic defects.

Prior to depositing the interferential coating, the surface of said substrate is usually submitted to a physical or chemical surface activating treatment, so as to reinforce the adhesion of the antireflective coating. Such pre-treatment is generally conducted under vacuum. It may be a bombardment with energetic and/or reactive species, for example with an ion beam ("Ion Pre-Cleaning" or "IPC") or with an electron beam, a corona discharge treatment, an ion spallation treatment, an ultraviolet treatment or a plasma-mediated treatment under vacuum, generally using an oxygen or an argon plasma. It may also be an acid or basic treatment and/or a solvent-based treatment (water, hydrogen peroxide or any organic solvent).

*8.2 The polarizing wire-grid containing coating, defined as IF2 and the interferential multilayered coatings (IF1 andIF2)*

As previously mentioned, the base element of the optical article according to the invention is coated at least with IF2 composed of an array of parallel nanostructured lines protruding from its front main surface and with an interferential multilayered coating, IF1, coated at least onto the remaining part of the front main surface of the base element.

Especially and as mentioned above, the invention relates to an optical article comprising at least:

(a) a base element having a front main surface and a rear main surface,
(b) a first interferential multilayered coating, defined as IF1, deposited onto at least a region of the front main surface of said base element, comprising at least one layer having a low refractive index which is lower than 1.55, and at least one layer having a high refractive index which is equal to or higher than 1.55,
(c) a polarizing wire-grid containing coating, defined as IF2, comprising at least one electrically conductive layer, at least one layer having a refractive index which is lower than 1.55 and at least one layer having a refractive index which is equal to or higher than 1.55,

wherein said IF2 is deposited on the base element in a predetermined pattern of parallel nanostructured lines protruding from the front surface of the base element so that linear nanogrooves are formed between the different adjacent parallel nanostructured lines and wherein IF1 is at least coated onto said linear nanogrooves,
characterized in that for an angle of incidence of 15°, IF1 and IF2 respectively have mean light reflection factors in the visible region $Rv_{(IF1)}$ and $Rv_{(IF2)}$ such that $|Rv_{(IF1)} - Rv_{(IF2)}| \leq 0.8$ %, preferably $\leq 0.7$ %, in particular $\leq 0.6$ %, typically $\leq 0.5$ %, such as $\leq 0.2$ %.,
wherein the refractive indexes being expressed at 25°C at a wavelength of 550 nm,

and wherein the mean light reflection factors in the visible region Rv is defined in the ISO 13666:1998 Standard and is measured in accordance with the ISO 8980-4.

In general, $|Rv_{(IF1)}-Rv_{(IF2)}| \leq 0.15$ %, in particular ≤ 0.13 %, typically ≤ 0.05 %, such as ≤ 0.03 %.

Specifically, the nanogrooves are only coated with IF1.

The structure of IF1 and IF2 will be described hereafter.

Hence, according to the invention, a part of the front main face of the base element is coated with IF2 having a predetermined pattern composed of an array of parallel nanostructured lines and another part, especially the remaining part of the front main face of the base element (i.e., having the complementary pattern relative to the predetermined pattern defined above) is only coated with IF1.

IF2 comprises at least one electrically conductive layer, at least one layer having a refractive index which is lower than 1.55 (defined as LI layer) and/or at least one layer having a refractive index which is equal to or higher than 1.55 (defined as HI layer).

Preferably, IF2 comprises at least one electrically conductive layer having free electron. This/these layer(s) enable(s) to obtain a polarization effect.

The at least one electrically conductive layer may comprise one or more of the following components or may be selected from the group consisting of: chromium, aluminium, silver, gold, copper, indium tin oxide, antimony tin oxide, polythiophene, polyaniline and polyacetylene and is preferably aluminium, silver and/or gold.

Advantageously, IF2 comprises from one to six, preferably from one to four electrically conductive layers. As used herein, "from one to six layers", includes the following values and/or any intervals comprised between these values: 1; 2; 3; 4; 5 and 6.

According to a characteristic of the invention, in the IF2 coating, if need be, all the different electrically conductive layers are independent from each other's. Each electrically conductive layer may have a physical thickness in the range of 4.0 nm to 30 nm, preferably from 4.5 nm to 28 nm, typically from 4.5 to 25 nm. As used herein, a "physical thickness in the range of 3 nm to 30 nm" includes the following values and/or any intervals comprised between these values (nm): 4.0; 4.1; 4.2; 4.3; 4.4; 4.5; 5; 6; 7; 8; 9; 10; 11; 12; 13; 14; 15; 16; 17; 18; 19 20; 21, 22; 23; 24; 25; 26; 27; 28; 29; 30.

According to another characteristic of the invention, the total thickness of all the electrically conductive layers is lower than or equal to 60 nm, preferably lower than or equal to 50 nm and typically lower than or equal to 40 nm. As used herein, a "physical thickness lower than or equal to 60 nm" includes the following values and/or any intervals comprised between these values (nm): 60; 55; 50; 45; 40; 35; 30; 25; 20; 15; 14; 13; 12; 11; 10; 9; 8; 7; 6; 5; 4.5.

As mentioned above, the IF2 comprises also one LI layer and/or one HI layer. Especially, the at least one electrically conductive layer is not the layer that is the closest from the base substrate/base element. In particular, the at least one electrically conductive layer is part of the interferential coating composed of said at least one LI layer and/or said one HI layer. Preferably, the at least one electrically conductive layer is positioned between two adjacent layers, each may be a HI layer or a LI layer. In other words, the at least one electrically conductive layer may be positioned between a LI layer and a HI layer, between two HI layers or between two LI layers.

The other layers of IF2 (i.e., the interferential layers): the HI layer(s) and the LI layer(s) do not need to alternate with each other in the IF2 coating, although they also may, according to one embodiment of the invention. Two HI layers (or more) may be deposited onto each other, as well as two LI layers (or more) may be deposited onto each other. In general (but not necessarily), the HI layers and LI layers alternate with each other in theIF2 coating according to the invention.

It is here a simple stack, since the total number of these LI layer(s) and/or HI layer(s) in the IF2 is in general higher than or equal to 2, preferably higher than or equal to 3, in particular higher than or equal to 4, especially higher than or equal to 5, such as higher than or equal to 6. In general, the total number of these LI layer(s) and/or HI layer(s) is lower than or equal to 13, preferably lower than or equal to 12, in particular lower than or equal to 11, especially lower than or equal to 10, such as lower than or equal to 9. According to an embodiment, the total number of these LI layer(s) and/or HI layer(s) in the IF2 is higher than or equal to 5 and lower than or equal to 7.

Hence, the total number of layers in IF2 (including the at least electrically conductive layer and the at least one HI and/or one LI layer) is higher than or equal to 3 layers, preferably higher than or equal to 5 layers and generally lower than or equal to 19 layers, preferably lower than or equal to 10.

The structure of the LI and HI layer(s) will be described hereafter.

In general, the HI layers are conventional high-refractive-index layers, well known in the art. They generally contain one or more mineral oxides such as, in a non-limiting manner, zirconia ($ZrO_2$), titanium oxide ($TiO_2$), trititanium pentoxide (TiaOs), alumina ($Al_2O_3$), tantalum pentoxide ($Ta_2O_5$), neodymium oxide ($Nd_2O_5$), praseodymium oxide ($Pr_2O_3$), praseodymium titanate ($PrTiO_3$), $La_2O_3$, $Nb_2O_5$, or $Y_2O_3$. Optionally the high-index layers may also contain silica or other low-refractive-index materials, provided that their refractive index is higher than 1.6 as indicated above. Preferred materials are $TiO_2$, $PrTiO_3$, $ZrO_2$, $Ta_2O_5$, $Al_2O_3$, $Y_2O_3$ and their mixtures. Preferably, the one or more HI layers are made of zirconia ($ZrO_2$).

The LI layers are also well-known low-refractive-index layers and may comprise, in a non-limiting manner: silicon oxide, or else a mixture of silica and alumina, in particular silica doped with alumina, the latter contributing to increase the thermal resistance of the UV-reflecting interference coating. Each LI layer is preferably a layer comprising at least 80% by weight silica and better still at least 90% by weight silica, relative to the total weight of the layer, and even better still consists of a silica layer (i.e.: not obtained by evaporation of at least one precursor compound, such as $SiO_2$, using electron-beam evaporation with introduction of oxygen gas in the vacuum chamber).

Optionally, the low-index layers may also contain high-refractive-index materials, provided that the refractive index of the resulting layer is lower than 1.55. When a LI layer comprising a mixture of $SiO_2$ and $Al_2O_3$ is used, it preferably comprises from 1% to 10% by weight, better still from 1% to 8% by weight and even better still from 1% to 5% by weight of $Al_2O_3$, with respect to the total weight of $SiO_2$ + $Al_2O_3$ in this layer. For example, $SiO_2$ doped with 4% or less $Al_2O_3$ by weight, or $SiO_2$ doped with 8% $Al_2O_3$ may be employed. Commercially available $SiO_2$ / $Al_2O_3$ mixtures may be used, such as the LIMA® mixture sold by Umicore Materials AG (refractive index comprised between n = 1.48-1.50 to 550 nm) or the substance L5® sold by Merck KGaA (refractive index n = 1.48 to 500 nm).

In addition, IF2 is characterized by its structure, its form.

Indeed, as mentioned above, IF2 is deposited on the base element in a pattern of parallel nanostructured lines protruding from the front surface of the base element. These nanostructured lines have generally a section in the form of a square or of a rectangle. They are characterized by a pitch, defined as "p", corresponding to center-to-center distance between two adjacent parallel nanostructured lines, a width defined as "w" that may correspond to the side of the square or the width of the rectangle and a height, defined as "H" that may correspond to the total thickness of IF2 or also the side of the square or the length of the rectangle. Fig.1 and 2 illustrate these characteristics.

In general, "p" is lower than or equal to 150 nm, preferably lower than or equal to 140 nm, more preferably lower than or equal to 130 nm. Also, according to a characteristic of the invention "p" is higher than or equal to 90 nm, preferably higher than or equal to 100 nm. As used herein, a range "lower than or equal to 150 nm" includes the following values and/or any intervals comprised between these values (nm): 150; 145; 140; 135; 130; 125; 120; 115; 110; 105; 100; 95; 90.

In particular, IF2 has a height "H" which is higher than or equal to 100 nm, preferably higher than or equal to 150 nm, in particular higher than or equal to 200 nm and typically higher than or equal to 215 nm. Especially, "H" is lower than or equal to 500 nm, preferably lower than or equal to 490 nm, in particular lower than or equal to 480 nm and typically lower than or equal to 470 nm

Generally, IF2 has a width "w" in the range of 10 the 90%, preferably in the range from 15 to 80%, in particular in the range of 20 to 60%, especially in the range of 40 to 55%, and typically corresponds to 50% of the pitch "p" defined above.

IF1 comprises at least one layer having a low refractive index which is lower than 1.55, defined as "LI layer", and at least one layer having a high refractive index which is equal to or higher than 1.55, defined as "HI layer. These HI and LI layers of IF1 may be the same (i.e.: same material, same physical thickness, etc.=) or may be different (i.e.: different materials, different thicknesses) from the HI and LI layers composing IF2 in an optical article. In any cases, they have the same definition and may be made from the same mineral oxides. Thus, their description is not reproduced hereafter.

However, according to a characteristic of the invention, when mirror properties (i.e.: reflective properties) are required, IF1 may comprise a thin layer comprising chromium, silicon and oxygen. This layer is considered as a HI layer since it has generally a refractive index equal or higher than 1.55. Hence, this thin layer comprising chromium, silicon and oxygen may be disposed between two LI layers. According to a characteristic of the invention, this thin layer comprising chromium, silicon and oxygen is positioned in direct contact below the uppermost layer of IF1. It may have a physical thickness lower than or equal to 20 nm, more preferably ranging from 1 to 18 nm, most preferably from 1 to 15 nm. This layer comprising chromium, silicon and oxygen preferably comprises chromium and a silicon oxide such as SiO or $SiO_2$, more preferably chromium and silicon dioxide ($SiO_2$). Said layer preferably comprises from 50 to 95 % by weight of silicon oxides (preferably silicon dioxide), more preferably from 65 to 92 % by weight, most preferably from 80 to 90 % by weight. Said layer preferably comprises from 5 to 50 % by weight of chromium, more preferably from 8 to 35 % by weight, most preferably from 10 to 20 % by weight. Examples of commercially available materials that can be used to form said layer comprising chromium, silicon and oxygen are the materials Malbunit 8/1 (mixture of SiO2 and Cr) and Flexo (mixture of SiO and Cr), provided by the Umicore Materials AG company.

IF1 is also here a simple stack, since the total number of these LI layer(s) and/or HI layer(s) in IF1 is in general higher than or equal to 2, preferably higher than or equal to 3, in particular higher than or equal to 4, especially higher than or equal to 5. In general, the total number of these LI layer(s) and/or HI layer(s) is lower than or equal to 10, preferably lower than or equal to 9, in particular lower than or equal to 8, especially lower than or equal to 7, such as lower than or equal to 6. According to an embodiment, the total number of these LI layer(s) and/or HI layer(s) in the IF1 is higher than or equal to 2 and lower than or equal to 4.

According to a characteristic of IF1, the innermost layer (i.e., the layer the closest from the base element) is a HI layer, such as a $ZrO_2$ layer. According to another characteristic of IF1, the outermost layer (i.e., the layer which is the farthest from the base element) is a LI layer, such as $SiO_2$.

In general, HI layers and LI layers alternate with each other in the IF1 coating according to the invention.

In particular, IF1 has a total thickness that may be lower than or equal to 250 nm, preferably lower than or equal to 230 nm and typically lower than or equal to 220 nm. Also, IF1 may have a total thickness higher than or equal to 50 nm, preferably higher than or equal to 60 nm and typically higher than or equal to 70 nm. A used herein, a range "lower than or equal to 250 nm" includes the following values and/or any intervals comprised between these values (nm): 250; 245; 240; 235; 230; 225; 220; 215; 200; 195; 190; 185; 180; 175; 170; 165; 160; 155; 150; 145; 140; 135; 130; 125; 120; 115; 110; 105; 100; 95; 90; 85; 80; 75; 60.

For instance, according to one embodiment, IF1 comprises, in order starting from the base element/substrate, which is optionally coated with one or more functional coatings,

(1) the innermost HI layer having a physical thickness lower than or equal to 150 nm, in particular ranging from 50 nm to 140 nm, preferably ranging from 60 nm to 130 nm, and typically ranging from 80 nm to 120 nm, such as 90 nm to 110 nm;
(2) a LI layer having a physical thickness lower than or equal to 120 nm, in particular ranging from 40 nm to 110 nm, preferably ranging from 45 nm to 105 nm, and typically ranging from 50 nm to 100 nm, such as ranging from 55 nm to 90 nm, such as 60 nm to 80 nm.

In general, this exemplified IF1 coating has antireflective characteristics.

According to another embodiment, IF1 comprises, in order starting from the base element/substrate, which is optionally coated with one or more functional coatings,

(1) the first HI layer having a physical thickness lower than or equal to 60 nm, in particular ranging from 15 nm to 50 nm, preferably ranging from 20 nm to 45 nm, and typically ranging from 25 nm to 40 nm,
(2) a first LI layer having a physical thickness lower than or equal to 50 nm, in particular ranging from 3 nm to 45 nm, preferably ranging from 5 nm to 40 nm, and typically ranging from 8 nm to 30 nm, such as ranging from 8 nm to 20 nm,
(3) the second HI layer having a physical thickness lower than or equal to 110 nm, in particular ranging from 60 nm to 100 nm, preferably ranging from 65 nm to 95 nm, and typically ranging from 70 nm to 90 nm,
(4) a second LI layer having a physical thickness lower than or equal to 120 nm, in particular ranging from 60 nm to 110 nm, preferably ranging from 65 nm to 100 nm, and typically ranging from 70 nm to 95 nm.

Also, this exemplified IF1 coating has antireflective characteristics.

According to another embodiment, IF1 comprises, in order starting from the base element/substrate, which is optionally coated with one or more functional coatings,

(1) the first HI layer having a physical thickness lower than or equal to 120 nm, in particular ranging from 70 nm to 120 nm, preferably ranging from 80 nm to 110 nm, and typically ranging from 90 nm to 100 nm,
(2) a first LI layer having a physical thickness lower than or equal to 60 nm, in particular ranging from 3 nm to 50 nm, preferably ranging from 5 nm to 40 nm, and typically ranging from 8 nm to 30 nm, such as ranging from 10 nm to 25 nm,
(3) the second HI layer, which is preferably the thin layer comprising chromium, silicon and oxygen, having a physical thickness lower than or equal to 40 nm, in particular ranging from 3 nm to 30 nm, preferably ranging from 5 nm to 25 nm, and typically ranging from 8 nm to 20 nm,
(4) a second LI layer having a physical thickness lower than or equal to 120 nm, in particular ranging from 60 nm to 110 nm, preferably ranging from 65 nm to 100 nm, and typically ranging from 70 nm to 95 nm.

This exemplified IF1 coating has reflective characteristics.

According to another embodiment, IF1 comprises, in order starting from the base element/substrate, which is optionally coated with one or more functional coatings,

(1) the first HI layer having a physical thickness lower than or equal to 50 nm, in particular ranging from 10 nm to 50 nm, preferably ranging from 13 nm to 45 nm, and typically ranging from 15 nm to 40 nm,
(2) a first LI layer having a physical thickness lower than or equal to 70 nm, in particular ranging from 25 nm to 65 nm, preferably ranging from 30 nm to 60 nm, and typically ranging from 35 nm to 55 nm,
(3) the second HI layer, which is preferably the thin layer comprising chromium, silicon and oxygen, having a physical thickness lower than or equal to 40 nm, in particular ranging from 3 nm to 30 nm, preferably ranging from 5 nm to 25 nm, and typically ranging from 8 nm to 20 nm,
(4) a second LI layer having a physical thickness lower than or equal to 40 nm, in particular ranging from 3 nm to 30 nm, preferably ranging from 5 nm to 25 nm, and typically ranging from 8 nm to 20 nm.

This exemplified IF1 coating has reflective characteristics.

According to an embodiment (named hereafter "first embodiment"), IF2 is composed of both IF1 and a polarizing wire-grid coating, defined as PWG, said PWG is coated in direct contact above IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55 described above for IF2. Hence, according to this embodiment, IF1 is first deposited onto the base element, and then PWG is deposited. Therefore, in the portions of the base element comprising the pattern of parallel nanostructured lines, there is a succession of two stacks that are in direct contact which are (from the base lement): IF1 and PWG, this combination forms IF2.

This embodiment is illustrated on Fig. 1 which shows a base element 1 comprising a front main surface 4 coated with IF1, 2, the outermost surface 3 of IF1 which is not in contact with the base element 1, is coated according to the specific pattern with PGW, 5.

Also, according to this specific embodiment, the characteristics of IF1 and PWG are identical to the ones described above and are not reproduced hereafter. Therefore, in general the pitch "p" (center-to-center distance between two adjacent nanostructured lines 5) and the width "w" (shown on Fig.1) are such as defined above. The height "H" (also shown on Fig.1) of the parallel nanostructured lines protruding from the front surface of the base element still corresponds to the height of PWG such as defined above. However, the height of IF2 corresponds to the physical thickness of IF1 + the physical thickness (or height H) of PWG. These characteristics are defined above and are not reproduced here.

According to another embodiment (named hereafter "second embodiment"), IF2 is composed of both IF1 and the polarizing wire-grid coating, defined as PWG (described above for the first embodiment), said PWG is coated in direct contact under IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55 described above for IF2.. Hence, according to this embodiment and as it will be described in more details hereafter, PWG is first deposited onto the base element thanks to the use of a mask having a pattern that is complementary to the predetermined one of PWG, and then (after removing the mask) IF1 is deposited. Therefore, in the portions of the base element comprising the predetermined pattern of parallel nanostructured lines, there is a succession of two stacks that are in direct contact which are (from the base element) : PWG and IF1, this combination forms IF2.

This embodiment is illustrated on Fig.2 which shows a base element 1 comprising a front main surface 4 coated with PGW 5 according to a specific pattern comprising parallel nanostructured lines protruding from said front main surface 4 of the base element 1. Between two adjacent parallel nanostructured lines, a linear nanogroove is formed. IF1, 2, is coated into said different nanogrooves thus formed and also is coated in direct contact onto the outermost layer of PGW, 5.

Also, according to this specific embodiment, the characteristics of IF1 and PWG are identical to the ones described above and are not reproduced hereafter. Therefore, in general the pitch "p" and the width "w" are such as defined above. However, the heigh "H" of the parallel nanostructured lines protruding from the front surface of the base element corresponds here to the height of PWG such as defined above + the height (also named the physical thickness) of IF1. Therefore, IF2 may have a total thickness that may be lower than or equal to 750 nm, preferably lower than or equal to 720 nm and typically lower than or equal to 700 nm. Also, IF1 may have a total thickness higher than or equal to 150 nm, preferably higher than or equal to 210 nm and typically higher than or equal to 270 nm. A used herein, a range "lower than or equal to 750 nm" includes the following values and/or any intervals comprised between these values (nm): 750; 700; 650; 600; 550; 500; 450; 400; 350; 300; 250; 200; 250.

According to another embodiment (named hereafter "third embodiment"), IF2 corresponds to PWG. According to this embodiment, PWG (such as defined above) having the predetermined pattern of parallel nanostructured lines, is neither positioned under or above IF1. IF1 is positioned, in direct contact, in the remaining part of the front main surface of the base element. In other word, IF1 is disposed in the nanogrooves which are formed between the different adjacent parallel nanostructured lines of PWG.

For the different embodiments, the base element may be previously coated with one or more functional coatings which is/are not selected from an interferential coating and IF1 and IF2 (or PWG) are not disposed under an interferential coating.

According to this specific embodiment, the characteristics of IF1 and PWG are identical to the ones described above and are not reproduced hereafter.

The optical characteristics of the different coatings according to the invention will be now described hereafter.

They are first characterized by their mean light reflection factor in the visible region for an angle of incidence of 15°.

Thus, IF1 and IF2 respectively have a mean light reflection factors in the visible region $Rv_{(IF1)}$ and $Rv_{(IF2)}$ such that the absolute difference, defined as $\Delta Rv(abs)^{IF1-IF2} = |Rv_{(IF1)}- Rv_{(IF2)}| \leq 0.8$ %, preferably ≤ 0.7 %, in particular ≤ 0.6 %, typically ≤ 0.5 %, such as ≤ 0.2 %.

In general, $|Rv_{(IF1)}-Rv_{(IF2)}| \leq 0.15$ %, in particular ≤ 0.13 %,such as ≤ 0.10 %, typically ≤ 0.05 %, such as ≤ 0.03 %. As used herein, an "absolute difference $\Delta Rv(abs) \leq 0.8$ %" includes the following values and/or any intervals comprised between these values (%): 0,8; 0,79; 0,78; 0,77; 0,76; 0,75; 0,74; 0,73; 0,72; 0,71; 0,70; 0,69; 0,68; 0,67; 0,66; 0,65; 0,64; 0,63; 0,62; 0,61; 0,60; 0,59; 0,58; 0,57; 0,56; 0,55; 0,54; 0,53; 0,52; 0,51; 0,50; 0,49; 0,48; 0,47; 0,46; 0,45; 0,44; 0,43; 0,42; 0,41; 0,40; 0,39; 0,38; 0,37; 0,36; 0,35; 0,34; 0,33; 0,32; 0,31; 0,30; 0,29; 0,28; 0,27; 0,26; 0,25; 0,24; 0,23; 0,22; 0,21; 0,20; 0,19; 0,18; 0,17; 0,16; 0,15; 0,14; 0,13; 0,12; 0,11; 0,10. 0,09; 0,08; 0,07; 0,06; 0,05; 0,04; 0,03; 0,02; 0,01; 0,00.

In addition, the relative difference of the mean light reflection factor of IF1 and IF2 according to the invention in such that

$$\Delta Rv(rel)^{IF1-IF2} = |\mathrm{Rv\ (IF1)} - \mathrm{Rv\ (IF2)}|/((Rv\ (IF1) + Rv\ (IF2))/2) \leq 0.2\ \%,$$

preferably ≤ 0.19%, in particular ≤ 0.18 %, typically ≤ 0.17 %, such as ≤ 0.15 %.

As used herein, an "absolute difference $\Delta Rv(rel)^{IF1-IF2} \leq 0.2$ %" includes the following values and/or any intervals comprised between these values (%):0,20; 0,19; 0,18; 0,17; 0,16; 0,15; 0,14; 0,13; 0,12; 0,11; 0,10. 0,09; 0,08; 0,07; 0,06; 0,05; 0,04; 0,03; 0,02; 0,01; 0,00.

These characteristics enable to obtain an optical article coated with two interferential bands (i.e., IF1 into the nanogrooves and IF2 defining also parallel nanostructured lines coated onto IF1 or IF1 into the nanogrooves and IF3 defining parallel nanostructured lines composed of PWG and IF1 OR IF1 into the nanogrooves and IF2 defining parallel nanostructured lines) which appears uniform, with no stripped appearance, for an observer.

According to an embodiment, for an angle of incidence of 15°, all of the different coatings that may composed the optical article according to the invention can have antireflective characteristics in the visible region. According to this embodiment, $Rv_{(IF1)}$ and $Rv_{(IF2)}$ are lower than or equal to 2.5%, preferably lower than or equal to 2.0%, in particular lower than or equal to 1.5% and typically lower than or equal to 1.0%. As used herein, "a mean light reflection factor in the visible region, Rv, ≤ 2.5 %" includes the following values and/or any intervals comprised between these values (%): 2.5; 2.4; 2.3; 2.2; 2.1; 2.0; 1.9; 1.8; 1.7; 1.6; 1.5; 1.4; 1.3; 1.2; 1.1; 1.0; 0.9; 0.8; 0.7; 0.6; 0.5; 0.4; 0.3; 0.2; etc.

According to another embodiment, for an angle of incidence of 15°, all of the different coatings that may composed the optical article according to the invention can have reflective characteristics, also named mirror characteristics, in the visible region. According to this embodiment, $Rv_{(IF1)}$ and $Rv_{(IF2)}$, are higher than 2.5%, preferably higher than or equal to 2.8%, in particular higher than or equal to 3.0% and typically lower than or equal to 3.5%. As used herein, " a mean light reflection factor in the visible region, Rv, > 2.5 %" includes the following values and/or any intervals comprised between these values (%): 2.6; 2.7; 2.8; 2.9; 3.0; 3.1; 3.2; 3.3; 3.4; 3.5; 4.0; 4.5; 5.0; 5.0; 5.5; 6.0; 6.5; 7.0; 7.5; 8.0; 8.5; 9.0; 9.5; 10.0; 3.5; 4.0; 4.5; 5.0; 5.0; 5.5; 6.0; 6.5; 7.0; 7.5; 8.0; 8.5; 9.0; 9.5; 10.0; 10.5; 11.0; 11.0; 11.5; 12.0; 12.5; 13.0; 13.5; 14.0; 14.5; 15.0; etc.

Then, the different coatings according to the invention are also characterized by their colorimetric characteristics, such as their hue, defined as "h" and their Chroma defined as "C*".

Especially, for an angle of incidence of 15°, IF1 andIF2 respectively have a Chroma C* defined in the international colorimetric CIE L*a*b* (1976) $C^*_{IF1}$, , $C^*_{IF2}$ such that the absolute difference of Chroma C*corresponding to $|C^*_{IF1} - C^*_{IF2}|$, is lower than or equal to 5, preferably is lower than or equal to 4, in particular is lower than or equal to 3, typically is lower than or equal to 2, such as is lower than or equal to 1, more preferably lower than or equal to 0.5, typically is lower than or equal to 0.3, such as is lower than or equal to 0.1 or 0.

As used herein, "an absolute difference of Chroma C* lower than or equal to 5" includes the following values and/or any intervals comprised between these values: 5; 4; 3; 2; 1; 0.

Also, for an angle of incidence of 15°, IF1, IF2 respectively have a hue angle defined in the international colorimetric CIE L*a*b* (1976) $h_{(IF1)}$, $h_{(IF2)}$ such that the absolute difference of hue "h" corresponding to $|h_{(IF1)} - h_{(IF2)}|$ is lower than or equal to 10°, preferably is lower than or equal to 8°, in particular is lower than or equal to 7°, typically is lower than or equal to 6°, such as is lower than or equal to 5°, such as is lower than or equal to 0.3°, preferably lower than or equal to 0.1°, more preferably lower than or equal to 0.05°, even more preferably lower than or equal to 0.01°. According to the invention, "an absolute difference of hue "h" lower than or equal to 10°" includes the following values and/or any intervals comprised between these values (°): 10; 9; 8; 7; 6; 5; 4; 3; 2; 1; 0.9; 0.8; 0.7; 0.6; 0.5; 0.4; 0.3; 0.2; 0.1; 0.09; 0.08; 0.07; 0.06; 0.05; 0.04; 0.03; 0.02; 0.01; 0.0.

Whatever the embodiment, it is possible to prepare IF1 and IF2 coatings without limitation as regards their hue angle h (0° to 360°), which relates to the residual color displayed by said coating.

In some embodiments, the IF1, and IF2 have a hue angle (h) ranging from 15° to 120°, preferably from 25° to 110°, thus resulting in a perceived residual reflected color that is brown. Especially, in some embodiments, the IF1 andIF2 coatings have a hue angle (h) ranging from 61° and 105°, thereby corresponding to a "yellow" residual reflection color. In some embodiments, the IF1 and IF2 coatings have a hue angle (h) higher than or equal to 120 °, more preferably higher than or equal to 130° and better ranging from 130° to 200°, thus resulting in an interferential coating having a green residual reflection color. Especially, in some embodiments, the IF1 and IF2 coatings have a hue angle (h) ranging from 106° and 209°, thereby corresponding to a "green" residual reflection color. In some embodiments, the IF1 and IF2 coatings have a hue angle (h) ranging from 200° to 300°, preferably from 250° to 280°, thus resulting in a perceived residual reflected that is blue. In particular, in some embodiments, the IF1 and IF2 coatings have a hue angle (h) ranging from 210° and 330°, thereby corresponding to "blue" and derivatives residual reflection colors, including a more "blue-purple" or even "purple" residual reflection color. In some embodiments, the IF1 and IF2 coatings have a hue angle (h) ranging from 331° to 60°, thereby corresponding to "red" and derivatives residual reflection colors, including "orange", "pink" or "pink gold" residual reflection color.

Furthermore, the relative difference of reflection color of the different coatings according to the invention may be such that:

$\Delta E^{IF1\text{-}IF2} \leq 0.15\,\%$, preferably $\leq 0.14\%$, in particular $\leq 0.13\%$, typically $\leq 0.12\,\%$, such as $\leq 0.11\,\%$ and for instance $\leq 0.10\,\%$.

According to the invention, "a relative difference of reflection color $\Delta E$ lower than or equal to 0.15%°" includes the following values and/or any intervals comprised between these values (%): ; 0.15; 0.14; 0.13; 0.12; 0.11; 0.10; 0.09; 0.08; 0.07; 0.06; 0.05; 0.04; 0.03; 0.02; 0.01; 0.005; 0.0.

The very close colorimetric characteristics between the different coatings that may composed the optical article of this invention, i.e.IF1 and IF2 enable to obtain an optical article that appears uniform for an observer. In other words, the nanogrooves coated with IF1 and the nanostructured lines formed with IF2 are very close or similar colorimetric properties so that there are invisible for an observer under normal lighting conditions.

These different characteristics of the coatings according to the invention, i.e., IF1, and IF2 enable to obtain an optical article having an excellent polarization efficiency.

According to a characteristic of the invention, the transmission polarization efficiency is higher than or equal to 75%, preferably higher than or equal to 80%, in particular higher than or equal to 85%, especially higher than or equal to 90%.

According to another aspect of the invention, the different interferential coatings of the invention (IF1, IF2) has a total physical thickness lower than or equal to 1 μm, in particular lower than or equal to 900 nm and typically lower than or equal to 750 nm.

As used herein, "a thickness lower than or equal to 1 μm" includes the following values (in nm) and/or any intervals comprised between these values (limits included): 1000; 950; 900; 850; 800; 790; 780; 770; 760; 750; 740; 730; 720; 710; 700; 690; 680; 670; 660; 650; 640; 630; 620; 610; 600; 590; 580; 570; 560; 550; 540; 530; 520; 510; 500; etc.

*B.3 Other functional layers*

In some applications, it is preferred that the main surface of the substrate be coated with one or more functional coatings improving its optical and/or mechanical properties, prior to depositing the interferential coating of the invention.

These functional coatings traditionally used in optics may be, without limitation, an impact-resistant primer layer, an internal abrasion-resistant coating (also named hard coat), an antistatic coating especially on the concave face of the optical article, or a stack made of two or more of such coatings. Preferably, the ophthalmic lens comprises no photochromic coating and/or comprises no photochromic substrate.

For instance, the abrasion-resistant and/or to scratch-resistant coatings can be those described in the patents FR 2702486 (EP 0614957), US 4 211 823 and US 5 015 523. Preferred primer compositions based on thermoplastic polyurethanes can be those described in the Japanese patents JP 63-141001 and JP 63-87223, poly(meth)acrylic primer compositions can be those described in the patent US 5 015 523, compositions based on thermosetting polyurethanes can be those described in the patent EP 0 404 111, and compositions based on poly(meth)acrylic latexes or on latexes of polyurethane type can be those described in the patents US 5 316 791 and EP 0 680 492. The hydrophobic and/or oleophobic coating composition may comprise fluorosilanes suwh as the ones described, inter alia in patents US 5,081,192, US 5,763,061, US 6,183, 872, US 5,739, 639, US 5,922,787, US 6,337,235, US 6,277,485 and EP 0933377. One preferred hydrophobic is sold by Daikin Industries under the denomination OPTOOL DSX(R). It is a question of a fluororesin comprising perfluoropropylene groups. These functional coatings are well known from the skilled person and will not be described in further detailed hereafter.

In general, an optical article such as an ophthalmic lens according to the invention comprises a base element/substrate coated in succession on its front face with an anti-shock primer layer, with an anti-abrasion and/or anti-scratch layer, the interferential coatings according to the invention, and with a hydrophobic and/or oleophobic coating. The optical article according to the invention is preferably an ophthalmic lens for a pair of spectacles (spectacle lenses), or an ophthalmic lens blank. The lens may be a polarized lens, a photochromic lens, or a tinted sunglass lens, optionally providing a correction.

In addition, the back face of the optical article such as ophthalmic lens substrate may be coated in succession with an anti-shock primer layer, with an anti-abrasion and/or anti-scratch layer, with a standard interferential coating according to the invention, and with a hydrophobic and/or oleophobic coating.

Preferably, the light absorption of the article coated according to the invention is lower than or equal to 50%. The factor $\tau_V$ should be understood as defined by the international normalized definition (ISO 13666:1998 Standard) and is measured in accordance with the ISO 8980-3 Standard. It is defined in the wavelength range of from 380 to 780 nm.

**C) Process**

The present invention also relates to different processes for manufacturing an optical article as defined above.

According to an embodiment, the process for manufacturing an optical article, especially according to the first embodiment described above (illustrated on Fig.1), comprises the following steps such as illustrated on Fig.4:

(10) providing the base element 1;
(11) depositing IF1 ,2, onto said base element 1;
(12) covering the base element 1 coated with IF1 ,2, with a removable mask 8 having a complementary pattern as compared to the one of PWG 5;
(13) depositing PWG 5;
(14) removing the removable mask 8.

Especially, Fig.4 shows a schematic procedure for making a polar optical article, such as an ophthalmic lens. Starting from a HC-coated substrate or base element (step 10), IF1 is first deposited on the lens surface 3 (step 11), then a mask 8 with the desired nanostructured line pattern is deposited on top of IF1 (2) by an advanced nanotechnology, e.g., nanoimprint lithography, ink-jet printing, stamping, and any other equivalent techniques (step 12). After masking, the additional layers of PWG 5 are deposited (step 13). Finally, the nano-structured line mask 8 is removed using suitable solvents (step 14), and then a polar lens with the nanostructured line pattern shown in Fig.5 is manufactured. Thus, parts of the lens' surface (under the masked area) are coated with IF1, while the rest parts are coated with IF1+ PWG (forming IF2), this last one comprising metal nano-wires.

According to an embodiment, the process for manufacturing an optical article, especially according to the second embodiment described above (illustrated on Fig.2), comprises the following steps such as illustrated on Fig.5:

(21) providing the base element 1;
(22) covering the base element 1 with a removable mask 8 having a complementary pattern as compared to the one of PWG 5;
(23) depositing PWG 5;
(24) removing the removable mask 8,
(25) depositing IF1 2.

In particular, by referring to Fig.5 a mask 8 with the nanostructured line pattern is first deposited on HC-coated lens surface 3 by an advanced nanotechnology such as described above (step 21). After masking, PWG are deposited (step 21). Then the nano-structured line mask 8 is removed using suitable solvents (step 22) . Finally, IF1 is deposited (step 23). After this procedure, parts of the lens' surface (corresponding to the masking area 8) are coated with IF1, while the rest parts are coated with PWG + IF1 (forming IF2). Thus, a polar lens is manufactured.

In general, the mask for each of the different processes comprises one or more of the following commercialized products: Y57-66, SGMI-22 and YNT1 inks.

In addition, the mask may be removed by applying onto said mask a detergent, such as IsoPropyl Alcohol (IPA) and/or methoxyl propanol.

As mentioned above, for the different methods, the mask 8 is deposited by nanoimprint lithography, ink-jet printing, stamping, and any other equivalent techniques.

The layers of IF1 and/or PWG including the at least one electrically conductive layer are preferably deposited by vapor phase deposition, under vacuum, in a vacuum deposition chamber, according to any of the following methods:

i) by evaporation, optionally under ion beam assistance;
ii) by ion-beam spraying;
iii) by cathode sputtering;
iv) by plasma-assisted chemical vapor deposition.

These various methods are described in the following references "Thin Film Processes" and "Thin Film Processes II," Vossen & Kern, Ed., Academic Press, 1978 and 1991, respectively. A particularly recommended method is evaporation under vacuum. Preferably, the deposition of each of the above-mentioned layers is conducted by evaporation under vacuum. Such a process does advantageously avoid heating the substrate, which is particularly interesting for coating heat-sensitive substrates such as organic glasses.

Naturally, the various embodiments described above for the optical article also apply to the different methods of manufacturing the optical article and will not be repeated below.

## EXAMPLES

### A) Characterization

Optical and colorimetric measurements (in reflection) of the surface of the base element (i.e.: substrate) coated on its front surface with the exemplified interferential multilayered coatings (front face) : mean reflection factors Rv, hue angle h, chroma C* in the international colorimetric CIE (L*, a*, b*) space were carried out with a spectrophotometer, taking into account the standard illuminant D65, and the standard observer 10° (for h and C*). They are provided for an angle of incidence of 15° for forward reflection (Cx face) and 35° for backward reflection (Cc face).

### B) General procedures

The ophthalmic lenses employed in the examples comprise a MR8® lens of 65 mm diameter, of refractive index of 1.60, of -2.00 diopter power and of 1.2 mm thickness, coated on its front face with the anti-abrasion and anti-scratch coating (hard coat) corresponding to the product Mithril® hard coating (Essilor) of 3 μm thickness (refractive index of 1.6), then IF1 and PWG coatings according to the invention are deposited according to a specific predetermined pattern.
The layers of IF1 and IF1 + PWG forming IF2 (Lenses 1 to 15) or PWG+IF1 forming IF2 (lenses 16 to 18) (forming IF2) were deposited without heating of the substrates by vacuum evaporation (evaporation source: the electron gun) (without introduction of an oxygen gas flow).
The deposition tool was a Satis 1200DLF machine equipped with a Temescal (8kV) electron gun for the evaporation of the oxides, and a (Veeco Mark II) ion gun for the preliminary phase of preparing the surface of the substrate with argon ions (IPC).
The thickness of the layers was controlled by means of a quartz microbalance. The spectral measurements were carried out using a variable-incidence Perkin-Elmer lambda 850 spectrophotometer with a universal reflectance accessory (URA).

### C) Test procedure

The process used to prepare the ophthalmic lenses comprised introducing the substrate coated on its front face with the anti-abrasion and anti-scratch coating into a vacuum deposition chamber, a step of pumping the chamber down until a secondary vacuum was obtained, a step of activating the surface of the substrate with a beam of argon ions (anode current: 1 A, anode voltage: 100 V, neutralization current: 130 mA), turning the ion irradiation off, forming on the substrate by evaporation the various layers of the IF1 coating and/or PWG by successive evaporations such as illustrated on the different tables below and at last a ventilation step.
Especially, for Lenses 1 to 15 (according to the first embodiment described above), the following process has been used:

(10) providing the base element;
(11) depositing IF1 onto said base element;
(12) covering the base element coated with IF1 with a removable mask composed of SGMI-22 ink having a complementary pattern as compared to the one of PWG;
(13) depositing PWG;
(14) removing the removable mask by applying IsoPropyl Alcohol (IPA).

For these examples, the nanostructured lines of PWG have the following characteristics: p = 100 nm; w = 50 nm; H= such as indicated in the tables below (correspond to the height of PWG).
In addition, for Lenses 16 to 18 (according to the second embodiment described above), the following process has been used:

(i) providing the base element;
(ii) covering the base element with a removable mask composed of SGMI-22 ink having a complementary pattern as compared to the one of PWG;
(iii) depositing PWG;
(iv) removing the removable mask by applying IsoPropyl Alcohol (IPA),
(v) depositing IF1.

For these examples, the nanostructured lines of PWG have the following characteristics: p = 100 nm; w = 50 nm; H= such as indicated in the tables below (PWG + IF1 = IF2).

In addition, for Lens 19 (according to the third embodiment described above), the following process has been used:

(i) providing the base element;
(ii) covering the base element with a removable mask having a complementary pattern as compared to the one of PWG;
(iii) depositing PWG;
(iv) removing the mask,
(v) covering the base element with another removable mask having a pattern that is identical to the one of PWG;
(vi) depositing IF1;
(vii) removing this another mask

For this example, the nanostructured lines of PWG have the following characteristics: p = 100 nm; w = 50 nm; H= such as indicated in the tables below (PWG = IF2).

**D) <u>Tested Lenses and results</u>**

**D.1 Lenses 1 to 11 according to the first embodiment of the invention wherein IF1 and IF2 have antireflective characteristics**

The tables 1 to 4 below illustrate the structure and the optical and colorimetric characteristics of the different coatings according to the invention.

| | **Lens 1** | | | | **Lens 2** | | | | **Lens 3** | | | |
|---|---|---|---|---|---|---|---|---|---|---|---|---|
| **PWG** | | | | | | | **$SiO_2$** | 47.9 | | | **$SiO_2$** | 98.2 |
| | | | **$SiO_2$** | 84.5 | | | **$ZrO_2$** | 39.0 | | | **$ZrO_2$** | 44.8 |
| | | | **Cr** | 8.5 | | | **Cr** | 13.3 | | | **$SiO_2$** | 81.9 |
| | | | **$SiO_2$** | 56.6 | | | **$SiO_2$** | 57.9 | | | **$ZrO_2$** | 37.2 |
| | | | **$ZrO_2$** | 69.4 | | | **Cr** | 7.7 | | | **Au** | 11.0 |
| | | | **$SiO_2$** | 11.8 | | | **$SiO_2$** | 89.5 | | | **$SiO_2$** | 81.0 |
| **IF1** | **$SiO_2$** | 69.0 | **$SiO_2$** | 69.0 | **$SiO_2$** | 69.0 | **$SiO_2$** | 69.0 | **$SiO_2$** | 69.0 | **$SiO_2$** | 69.0 |
| | **$ZrO_2$** | 108.1 | **$ZrO_2$** | 108.1 | **$ZrO_2$** | 108.1 | **$ZrO_2$** | 108.1 | **$ZrO_2$** | 108.1 | **$ZrO_2$** | 108.1 |
| **Optical and colorimetric characteristics** | | | | | | | | | | | | |
| | **IF1** | | **IF2 (IF1+PWG)** | | **IF1** | | **IF2 (IF1+PWG)** | | **IF1** | | **IF2 (IF1+PWG)** | |
| **L*** | 6.4 | | 6.9 | | 6.4 | | 5.3 | | 6.4 | | 6.2 | |
| **a*** | 20.3 | | 22.0 | | 20.3 | | 20.2 | | 20.3 | | 20.2 | |
| **b*** | -14.7 | | -15.8 | | -14.7 | | -14.7 | | -14.8 | | -14.7 | |
| **C*** | 25.1 | | 27.1 | | 25.1 | | 25.0 | | 25.1 | | 25.0 | |
| **h** | 324 | | 324 | | 324 | | 324 | | 324 | | 324 | |
| **Rv** | 0.66 | | 0.75 | | 0.66 | | 0.58 | | 0.66 | | 0.68 | |
| $\Delta Rv(abs)^{IF1-IF2}$ | 0.09 | | | | 0.08 | | | | 0.02 | | | |
| $\Delta Rv(rel)^{IF1-IF2}$ | 0.13 | | | | 0.13 | | | | 0.025 | | | |
| $\Delta E^{IF1-IF2}$ | 0.078 | | | | 0.044 | | | | 0.007 | | | |

*Table 1*

| | Lens 4 | | | | Lens 5 | | | | Lens 6 | | | |
|---|---|---|---|---|---|---|---|---|---|---|---|---|
| PWG | | | | | | | | | | | $SiO_2$ | 60.7 |
| | | | | | | | | | | | $ZrO_2$ | 14.7 |
| | | | $SiO_2$ | 5.34 | | | $SiO_2$ | 62.7 | | | Au | 11.8 |
| | | | $ZrO_2$ | 40.0 | | | $ZrO_2$ | 17.9 | | | $ZrO_2$ | 70.8 |
| | | | Au | 24.9 | | | Au | 14.4 | | | Au | 7.9 |
| | | | $ZrO_2$ | 37.3 | | | $ZrO_2$ | 68.8 | | | $SiO_2$ | 6.9 |
| | | | $SiO_2$ | 21.2 | | | Au | 14.8 | | | Au | 7.4 |
| | | | $ZrO_2$ | 25.2 | | | $ZrO_2$ | 55.7 | | | $ZrO_2$ | 64.0 |
| | | | Au | 16.5 | | | Au | 10.9 | | | Au | 13.8 |
| | | | $SiO_2$ | 67.9 | | | $SiO_2$ | 78.3 | | | $SiO_2$ | 79.2 |
| IF1 | $SiO_2$ | 69.0 | $SiO_2$ | 69.0 | $SiO_2$ | 69.0 | $SiO_2$ | 69.0 | $SiO_2$ | 69.0 | $SiO_2$ | 69.0 |
| | $ZrO_2$ | 108.1 | $ZrO_2$ | 108.1 | $ZrO_2$ | 108.1 | $ZrO_2$ | 108.1 | $ZrO_2$ | 108.1 | $ZrO_2$ | 108.1 |
| Optical and colorimetric characteristics | | | | | | | | | | | | |
| | IF1 | | IF2 (IF1+PWG) | | IF1 | | IF2 (IF1+PWG) | | IF1 | | IF2 (IF1+PWG) | |
| L* | 6.4 | | 6.2 | | 6.4 | | 6.0 | | 6.4 | | 6.0 | |
| a* | 20.3 | | 20.2 | | 20.3 | | 20.2 | | 20.3 | | 20.2 | |
| b* | -14.7 | | -14.7 | | -14.7 | | -14.7 | | -14.8 | | -14.7 | |
| C* | 25.1 | | 25.0 | | 25.1 | | 25.0 | | 25.1 | | 25.0 | |
| h | 324 | | 324 | | 324 | | 324 | | 324 | | 324 | |
| Rv | 0.66 | | 0.68 | | 0.66 | | 0.65 | | 0.66 | | 0.66 | |
| $\Delta Rv(abs)^{IF1-IF2}$ | 0.02 | | | | 0.01 | | | | 0.00 | | | |
| $\Delta Rv(rel)^{IF1-IF2}$ | 0.035 | | | | 0.021 | | | | 0.10 | | | |
| $\Delta E^{IF1-IF2}$ | 0.009 | | | | 0.016 | | | | 0.14 | | | |

*Table 2*

| | Lens 7 | | | | Lens 8 | | | | Lens 9 | | | |
|---|---|---|---|---|---|---|---|---|---|---|---|---|
| PWG | | | | | | | $SiO_2$ | 6.0 | | | | |
| | | | | | | | $ZrO_2$ | 41.7 | | | | |
| | | | $SiO_2$ | 81.1 | | | Al | 6.7 | | | | |
| | | | $ZrO_2$ | 61.1 | | | $ZrO_2$ | 18.4 | | | $SiO_2$ | 99.9 |
| | | | $SiO_2$ | 136.0 | | | $SiO_2$ | 86.0 | | | $ZrO_2$ | 70.2 |
| | | | Ag | 10.0 | | | $ZrO_2$ | 20.9 | | | Ag | 6.8 |
| | | | $SiO_2$ | 104.7 | | | Al | 6.7 | | | $ZrO_2$ | 65.9 |
| | | | Ag | 9.1 | | | $ZrO_2$ | 37.6 | | | Au | 11.8 |
| | | | $SiO_2$ | 59.1 | | | $SiO_2$ | 21.8 | | | $SiO_2$ | 68.8 |
| IF1 | $SiO_2$ | 69.0 | $SiO_2$ | 69.0 | $SiO_2$ | 69.0 | $SiO_2$ | 69.0 | $SiO_2$ | 69.0 | $SiO_2$ | 69.0 |
| | $ZrO_2$ | 108.1 | $ZrO_2$ | 108.1 | $ZrO_2$ | 108.1 | $ZrO_2$ | 108.1 | $ZrO_2$ | 108.1 | $ZrO_2$ | 108.1 |

| | Lens 7 | | Lens 8 | | Lens 9 | |
|---|---|---|---|---|---|---|
| **Optical and colorimetric characteristics** | | | | | | |
| | **IF1** | **IF2 (IF1+PWG)** | **IF1** | **IF2 (IF1+PWG)** | **IF1** | **IF2 (IF1+PWG)** |
| **L*** | 6.4 | 5.9 | 6.3 | 7.0 | 6.4 | 6.4 |
| **a*** | 20.3 | 20.2 | 20.3 | 20.2 | 20.3 | 20.2 |
| **b*** | -14.7 | -14.7 | -14.7 | -14.7 | -14.7 | -14.7 |
| **C*** | 25.1 | 25.0 | 25.1 | 25.0 | 25.1 | 25.0 |
| **h** | 324 | 324 | 324 | 324 | 324 | 324 |
| **Rv** | 0.66 | 0.65 | 0.66 | 0.73 | 0.66 | 0.68 |
| $\Delta Rv(abs)^{IF1-IF2}$ | 0.01 | | 0.07 | | 0.02 | |
| $\Delta Rv(rel)^{IF1-IF2}$ | 0.019 | | 0.095 | | 0.026 | |
| $\Delta E^{IF1-IF2}$ | 0.020 | | 0.024 | | 0.004 | |

*Table 3*

| | Lens 10 | | | | Lens 11 | | | |
|---|---|---|---|---|---|---|---|---|
| **PWG** | | | $SiO_2$ | 17.7 | | | | |
| | | | $ZrO_2$ | 37.3 | | | $SiO_2$ | 79.1 |
| | | | Ag | 12.9 | | | Cr | 7.7 |
| | | | $ZrO_2$ | 89.1 | | | $ZrO_2$ | 17.6 |
| | | | Al | 5.3 | | | $SiO_2$ | 28.0 |
| | | | $ZrO_2$ | 74.2 | | | $ZrO_2$ | 10.3 |
| | | | Au | 13.6 | | | Cr | 15.5 |
| | | | $SiO_2$ | 71.0 | | | $ZrO_2$ | 67.5 |
| **IF1** | $SiO_2$ | 69.0 | $SiO_2$ | 69.0 | $SiO_2$ | 69.0 | $SiO_2$ | 69.0 |
| | $ZrO_2$ | 108.1 | $ZrO_2$ | 108.1 | $ZrO_2$ | 108.1 | $ZrO_2$ | 108.1 |
| **Optical and colorimetric characteristics** | | | | | | | | |
| | **IF1** | | **IF2 (IF1+PWG)** | | **IF1** | | **IF2 (IF1+PWG)** | |
| **L*** | 6.4 | | 6.6 | | 6.4 | | 7.3 | |
| **a*** | 20.3 | | 20.2 | | -6.4 | | -6.4 | |
| **b*** | -14.8 | | -14.7 | | 6.4 | | -6.4 | |
| **C*** | 25.1 | | 25.0 | | 9.0 | | 9.0 | |
| **h** | 324 | | 324 | | 135 | | 135 | |
| **Rv** | 0.66 | | 0.73 | | 0.72 | | 0.82 | |
| $\Delta Rv(abs)^{IF1-IF2}$ | 007 | | | | 0.10 | | | |
| $\Delta Rv(rel)^{IF1-IF2}$ | 0.095 | | | | 0.140 | | | |
| $\Delta E^{IF1-IF2}$ | 0.010 | | | | 0.102 | | | |

*Table 4*

**D.2 Lenses 12 to 15 according to the first embodiment of the invention wherein IF1 and IF2 have reflective characteristics**

The tables 5 to 6 below illustrate the structure and the optical and colorimetric characteristics of the different coatings according to the invention.

| | Lens 12 (Ex.13 of the memo) | | | | Lens 13 (Ex.15 of the memo) | | | |
|---|---|---|---|---|---|---|---|---|
| | | | $SiO_2$ | 80.5 | | | $SiO_2$ | 56.8 |
| | | | Cr | 12.6 | | | Ag | 9.1 |
| | | | $SiO_2$ | 43.6 | | | $SiO_2$ | 117.4 |
| | | | Cr | 8.8 | | | Ag | 10.1 |
| | | | $ZrO_2$ | 40.8 | | | $ZrO_2$ | 12.2 |
| | | | $SiO_2$ | 52.2 | | | $SiO_2$ | 33.4 |
| | $SiO_2$ | 24.3 | $SiO_2$ | 24.3 | $SiO_2$ | 24.3 | $SiO_2$ | 24.3 |
| | Malbunit | 13.2 | Malbunit | 13.2 | Malbunit | 13.2 | Malbunit | 13.2 |
| IF1 | $SiO_2$ | 20.6 | $SiO_2$ | 20.6 | $SiO_2$ | 20.6 | $SiO_2$ | 20.6 |
| | $ZrO_2$ | 95.0 | $ZrO_2$ | 95.0 | $ZrO_2$ | 95.0 | $ZrO_2$ | 95.0 |
| Optical and colorimetric characteristics | | | | | | | | |
| | IF1 | | IF2 (IF1+PWG) | | IF1 | | IF2 (IF1+PWG) | |
| L* | 23.7 | | 23.7 | | 23.7 | | 23.7 | |
| a* | 13.0 | | 13.0 | | 13.0 | | 13.0 | |
| b* | -7.5 | | -7.5 | | -7.5 | | -7.5 | |
| C* | 15.0 | | 15.0 | | 15.0 | | 15.0 | |
| h | 330 | | 330 | | 330 | | 330 | |
| Rv | 4.0 | | 4.0 | | 4.0 | | 4.0 | |
| $\Delta Rv(abs)^{IF1-IF2}$ | 0 | | | | 0.0 | | | |
| $\Delta Rv(rel)^{IF1-IF2}$ | 0 | | | | 0 | | | |
| $\Delta E^{IF1-IF2}$ | 0.001 | | | | 0.003 | | | |

*Table 5*

| | Lens 14 (Ex.17 of the memo) | | | | Lens 15 (Ex.18 of the memo) | | | |
|---|---|---|---|---|---|---|---|---|
| PWG | | | | | | | $SiO_2$ | 102.8 |
| | | | $SiO_2$ | 99.4 | | | $ZrO_2$ | 38.6 |
| | | | $ZrO_2$ | 111.8 | | | $SiO_2$ | 53.7 |
| | | | Ag | 6.7 | | | Cr | 9.3 |
| | | | $SiO_2$ | 113.8 | | | $SiO_2$ | 90.4 |
| | | | Au | 12.9 | | | Cr | 6.6 |
| | | | $ZrO_2$ | 42.4 | | | $SiO_2$ | 37.7 |
| | $SiO_2$ | 11.3 | $SiO_2$ | 11.3 | $SiO_2$ | 5.8 | $SiO_2$ | 5.8 |
| | Malbunit | 10.0 | Malbunit | 10.0 | Malbunit | 14.4 | Malbunit | 14.4 |
| IF1 | $SiO_2$ | 46.6 | $SiO_2$ | 46.6 | $SiO_2$ | 40.1 | $SiO_2$ | 40.1 |
| | $ZrO_2$ | 30.8 | $ZrO_2$ | 30.8 | $ZrO_2$ | 16.3 | $ZrO_2$ | 16.3 |
| Optical and colorimetric characteristics | | | | | | | | |
| | IF1 | | IF2 (IF1+PWG) | | IF1 | | IF2 (IF1+PWG) | |
| L* | 32.5 | | 32.8 | | 38.2 | | 38.0 | |
| a* | 1.13 | | 1.12 | | -0.7 | | -0.5 | |
| b* | 15.0 | | 15.0 | | 1.8 | | 1.9 | |
| C* | 15 | | 15 | | 2 | | 2 | |
| h | 86 | | 86 | | 111 | | 106 | |

| | Lens 14 (Ex.17 of the memo) | | Lens 15 (Ex.18 of the memo) | |
|---|---|---|---|---|
| Rv | 7.5 | 7.5 | 10.2 | 10.2 |
| $\Delta Rv(abs)^{IF1-IF2}$ | 0.0 | | 0.0 | |
| $\Delta Rv(rel)^{IF1-IF2}$ | 0.0 | | 0.0 | |
| $\Delta E^{IF1-IF2}$ | 0.019 | | 0.11 | |

*Table 6*

**D.3 Lens 16 according to second embodiment of the invention wherein IF1 and IF2 have antireflective characteristics**

The table 7 below illustrates the structure and the optical and colorimetric characteristics of the different coatings IF1 and IF2 according to the invention.

| | Lens 16 (Ex.12 of the memo) | | | |
|---|---|---|---|---|
| **IF1** | **$SiO_2$** | 86.0 | **$SiO_2$** | 86.0 |
| | **$ZrO_2$** | 80.5 | **$ZrO_2$** | 80.5 |
| | **$SiO_2$** | 13.3 | **$SiO_2$** | 13.3 |
| | **$ZrO_2$** | 34.7 | **$ZrO_2$** | 34.7 |
| **PWG** | | | **$SiO_2$** | 50.3 |
| | | | **$ZrO_2$** | 29.1 |
| | | | **$SiO_2$** | 26.5 |
| | | | **Cr** | 8.5 |
| | | | **$SiO_2$** | 66.4 |
| | | | **Cr** | 10.7 |
| | | | **$SiO_2$** | 6.4 |
| | | | **$ZrO_2$** | 43.1 |
| **Optical and colorimetric characteristics** | | | | |
| | **IF1** | | **IF2 (PWG + IF1)** | |
| **L*** | 6.4 | | 7.2 | |
| **a*** | -6.4 | | -6.2 | |
| **b*** | 6.4 | | 6.2 | |
| **C*** | 9.0 | | 8.7 | |
| **h** | 135 | | 135 | |
| **Rv** | 0.72 | | 0.81 | |
| $\Delta Rv(abs)^{IF1-IF3}$ | 0.09 | | | |
| $\Delta Rv(rel)^{IF1-IF3}$ | 0.12 | | | |
| $\Delta E^{IF1-I32}$ | 0.097 | | | |

*Table 7*

**D.4 Lenses 17 and 18 according to second embodiment of the invention wherein IF1 and IF2 have reflective characteristics**

The table 8 below illustrates the structure and the optical and colorimetric characteristics of the different coatings IF1 and IF2 according to the invention.

| | Lens 17 (Ex.14 of the memo) | | | | Lens 18 (Ex.16 of the memo) | | | |
|---|---|---|---|---|---|---|---|---|
| IF1 | $SiO_2$ | 24.3 | $SiO_2$ | 24.3 | $SiO_2$ | 24.3 | $SiO_2$ | 24.3 |
| | Malbunit | 13.2 | Malbunit | 13.2 | Malbunit | 13.2 | Malbunit | 13.2 |
| | $SiO_2$ | 20.6 | $SiO_2$ | 20.6 | $SiO_2$ | 20.6 | $SiO_2$ | 20.6 |
| | $ZrO_2$ | 95.0 | $ZrO_2$ | 95.0 | $ZrO_2$ | 95.0 | $ZrO_2$ | 95.0 |
| PWG | | | $SiO_2$ | 89.9 | | | $ZrO_2$ | 41.3 |
| | | | Au | 6.5 | | | Al | 5.2 |
| | | | $SiO_2$ | 92.9 | | | $ZrO_2$ | 36.9 |
| | | | Au | 12.1 | | | $SiO_2$ | 78.9 |
| | | | $SiO_2$ | 138.0 | | | Al | 4.8 |
| | | | $ZrO_2$ | 69.0 | | | $ZrO_2$ | 32.9 |
| | | | | | | | $SiO_2$ | 141.8 |
| | | | | | | | $ZrO_2$ | 16.6 |
| Optical and colorimetric characteristics | | | | | | | | |
| | IF1 | | IF2 (PWG + IF1) | | IF1 | | IF2 (PWG + IF1) | |
| L* | 23.7 | | 23.9 | | 23.7 | | 23.7 | |
| a* | 13.0 | | 13.0 | | 13.0 | | 13.0 | |
| b* | -7.5 | | -7.5 | | -7.5 | | -7.5 | |
| C* | 15.0 | | 15.0 | | 15.0 | | 15.0 | |
| h | 330 | | 330 | | 330 | | 330 | |
| Rv | 4.0 | | 4.0 | | 4.0 | | 4.0 | |
| $\Delta Rv(abs)^{IF1\text{-}IF2}$ | 0.0 | | | | 0.0 | | | |
| $\Delta Rv(rel)^{IF1\text{-}IF2}$ | $2.5^{E-05}$ | | | | 0.0 | | | |
| $\Delta E^{IF\text{-}1IF2}$ | 0.010 | | | | 0.0036 | | | |

*Table 8*

**D.5 Lens 19 according to third embodiment of the invention (as shown on Fig.3) wherein IF1 and IF2 have reflective characteristics**

The tables 9 to 11 below illustrate the structure and the optical and colorimetric characteristics of Lens 19; especially tables 9 and 10 show the different coatings IF1 and IF2 according to the invention of this Lens 19.

*Table 9*

| IF1 | |
|---|---|
| SiO2 | 85.97 |
| ZrO2 | 80.53 |
| SiO2 | 13.31 |
| ZrO2 | 34.70 |
| Mithril 1.6 | |
| Rv | 0.7168% |
| h* | 135° |
| C* | 9.0 |

*Table 10*

| IF2 (PWG) | |
|---|---|
| SiO2 | 77.71 |
| Cr | 7.06 |
| ZrO2 | 14.67 |
| SiO2 | 22.06 |
| ZrO2 | 10.93 |
| Cr | 42.53 |
| SiO2 | 111.89 |
| ZrO2 | 52.35 |
| Mithril 1.6 | |
| Rv | 0.7168% |
| h* | 135° |
| C* | 9.0 |

*Table 11*

| | Lens 19 | |
|---|---|---|
| | IF1 | IF2 (PWG) |
| **L*** | 6.4 | 6.3 |
| **a*** | -6.4 | -6.4 |
| **b*** | 6.4 | 6.4 |
| **C*** | 9.0 | 9.0 |
| **h** | 135 | 135 |
| **Rv** | 4.0 | 4.0 |
| $\Delta Rv(abc)^{IF1\text{-}IF2}$ | 0.0 | |
| $\Delta Rv(rel)^{IF1\text{-}IF2}$ | 0.0 | |
| $\Delta E^{IF\text{-}1IF2}$ | 0.003 | |

## Claims

**1.** An optical article comprising at least:

(a) a base element having a front main surface and a rear main surface,
(b) a first interferential multilayered coating, defined as IF1, deposited onto at least a region of the front main surface of said base element, comprising at least one layer having a low refractive index which is lower than 1.55, and at least one layer having a high refractive index which is equal to or higher than 1.55,
(c) a polarizing wire-grid containing coating, defined as IF2, comprising at least one electrically conductive layer, at least one layer having a refractive index which is lower than 1.55 and at least one layer having a refractive index which is equal to or higher than 1.55,
wherein said IF2 is deposited on the base element in a predetermined pattern of parallel nanostructured lines protruding from the front surface of the base element so that linear nanogrooves are formed between the different adjacent parallel nanostructured lines and wherein IF1 is at least coated onto said linear nanogrooves,
**characterized in that** for an angle of incidence of 15°, IF1 and IF2 respectively have mean light reflection factors in the visible region $Rv_{(IF1)}$ and $Rv_{(IF2)}$ such that $|Rv_{(IF1)} - Rv_{(IF2)}| \leq 0.8$ %, preferably $\leq 0.7$ %, in particular $\leq 0.6$ %, typically $\leq 0.5$ %, such as $\leq 0.2$ %.,
wherein the refractive indexes being expressed at 25°C at a wavelength of 550 nm, and wherein the mean light reflection factors in the visible region Rv is defined in the ISO 13666:1998 Standard and is measured in accordance with the ISO 8980-4.

2. The optical article according to claim 1, wherein $|Rv_{(IF1)}-Rv_{(IF2)}| \leq 0.15$ %, in particular $\leq 0.13$ %, typically $\leq 0.05$ %, such as $\leq 0.03$ %.

3. The optical article according to claim 1 or 2, wherein said IF2 is composed of both IF1 and a polarizing wire-grid coating, defined as PWG, said PWG is coated in direct contact above IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55.

4. The optical article according to claim 1 or 2, wherein said IF2 is composed of both IF1 and a polarizing wire-grid coating, defined as PWG, said PWG is coated in direct contact under IF1 and has the predetermined pattern of parallel nanostructured lines protruding from the front surface of the base element and is composed of the at least one electrically conductive layer, the at least one layer having a refractive index which is lower than 1.55 and the at least one layer having a refractive index which is equal to or higher than 1.55.

5. The optical article according to any one of the preceding claims, wherein for an angle of incidence of 15°, IF1 and IF2 respectively have a Chroma C* defined in the international colorimetric CIE L*a*b* (1976) $C^*_{IF1}$, $C^*_{IF2}$ such that $IC^*_{IF1} -C^*_{IF2}|$ is lower than or equal to 5, preferably is lower than or equal to 4, in particular is lower than or equal to 3, typically is lower than or equal to 2, more preferably is lower than or equal to 1, in particular is lower than or equal to 0.5, typically is lower than or equal to 0.3, such as is lower than or equal to 0.1.

6. The optical article according to any one of the preceding claims, wherein for an angle of incidence of 15°, IF1 and IF2 respectively have a hue angle defined in the international colorimetric CIE L*a*b* (1976) $h_{(IF1)}$, $h_{(IF2)}$, such that $| h_{(IF1)}- h_{(IF2)}|$ is lower than or equal to 10°, preferably is lower than or equal to 8°, in particular is lower than or equal to 7°, typically is lower than or equal to 6°, such as is lower than or equal to 0.3°, preferably lower than or equal to 0.1°, more preferably lower than or equal to 0.05°, even more preferably lower than or equal to 0.01°.

7. The optical article according to any one of the preceding claims , wherein the polarization efficiency defined as $(T_{TM}/(T_{TM}+T_{TE}))$ wherein $T_{TM}$ is the transmittance of TM which refers to the light component of which electric-field vector is perpendicular to the parallel nanostructured lines of IF2 and $T_{TE}$ is the transmittance of TE, TE referring to light component of which electric-field vector is parallel to the parallel nanostructured lines of IF2., is higher than or equal to 75%, preferably higher than or equal to 80%, in particular higher than or equal to 85%, especially higher than or equal to 90%.

8. The optical article according to any one of the preceding claims, wherein IF2 has a pitch, defined as "p", corresponding to center-to-center distance between two adjacent parallel nanostructured lines which is lower than or equal to 150 nm, preferably lower than or equal to 140 nm, preferably lower than or equal to 130 nm, more preferably lower than or equal to 110 nm.

9. The optical article according to any one of the preceding claims, wherein IF2 has a height corresponding respectively to the total physical thickness of the different layers composing IF2, which is higher than or equal to 200 nm, preferably higher than or equal to 250 nm, in particular higher than or equal to 300 nm and typically higher than or equal to 350 nm.

10. The optical article according to any one of the preceding claims, wherein the parallel nanostructured lines are identical and have a width, defined as w, in the range of 10 the 90%, preferably in the range from 15 to 80%, in particular in the range of 20 to 60%, especially in the range of 40 to 55%, typically 50% of the pitch as defined in claim 8.

11. The optical article according to claims 3 or 4, combined to any one of the preceding claims 5 to 10, wherein PWG comprises from one to six, preferably from one to four electrically conductive layers, in particular each electrically conductive layer has a physical thickness in the range of 4.5 nm to 30 nm, preferably from 4.5 nm to 28 nm, typically from 4.5 to 25 nm, advantageously the total thickness of all the electrically conductive layers is lower than or equal to 80 nm, preferably lower than or equal to 70 nm and typically lower than or equal to 50 nm.

12. The optical article according to any one of the preceding claims 1 to 11, wherein for an angle of incidence of 15°,

$Rv_{(IF1)}$ and $Rv_{(IF2)}$ are lower than or equal to 2.5%, preferably lower than or equal to 2.0%, in particular lower than or equal to 1.5% and typically lower than or equal to 1.0%,
or
$Rv_{(IF1)}$ and $Rv_{(IF2)}$ are higher than 2.5%, preferably higher than or equal to 3.0%, in particular higher than or equal to 3.5% and typically higher than or equal to 4.0%.

**13.** Method for manufacturing an optical article according to any one of the preceding claims 3 to 12, comprising the successive following steps:

(10) providing the base element;
(11) depositing onto said base element IF1;
(12) covering the base element coated with IF1 with a removable mask having a complementary pattern as compared to the one of PWG;
(13) depositing PWG;
(14) removing the removable mask.

**14.** Method for manufacturing an optical article according to any one of the preceding claims 4 to 12, comprising the successive following steps:

(20) providing the base element;
(21) covering the base element with a removable mask having a complementary pattern as compared to the one of PWG;
(22) depositing PWG;
(23) removing the removable mask;
(24) depositing IF1.

**15.** Method according to claim 13 or 14, wherein the mask is coating onto the base element coated or not with IF1 by nanoimprint lithography, ink-jet printing, or stamping.

Fig.1

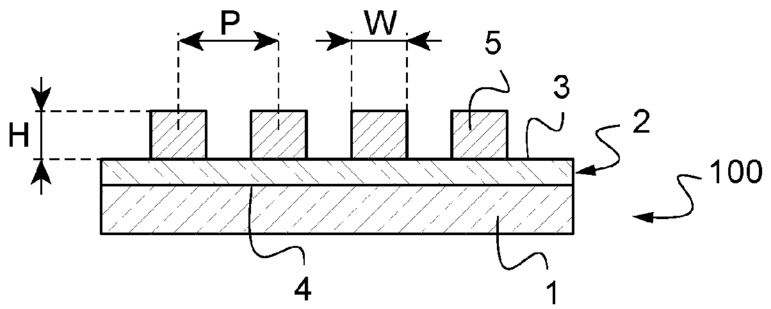


Fig.2

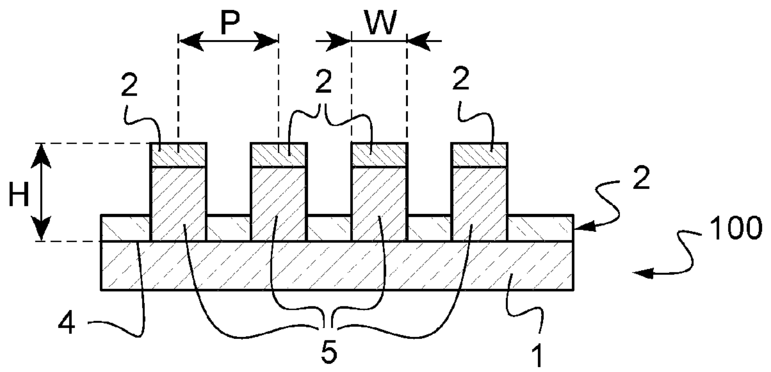


Fig.3

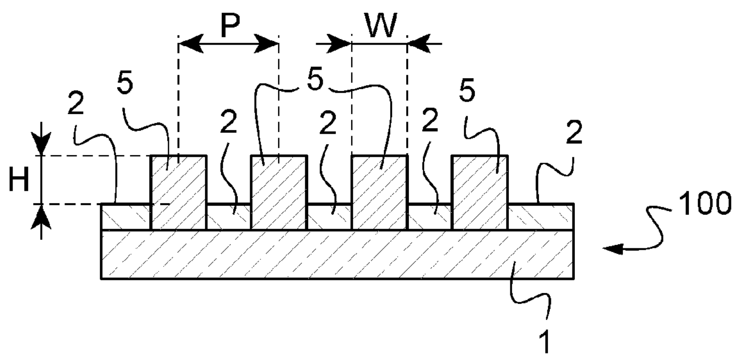


Fig.4

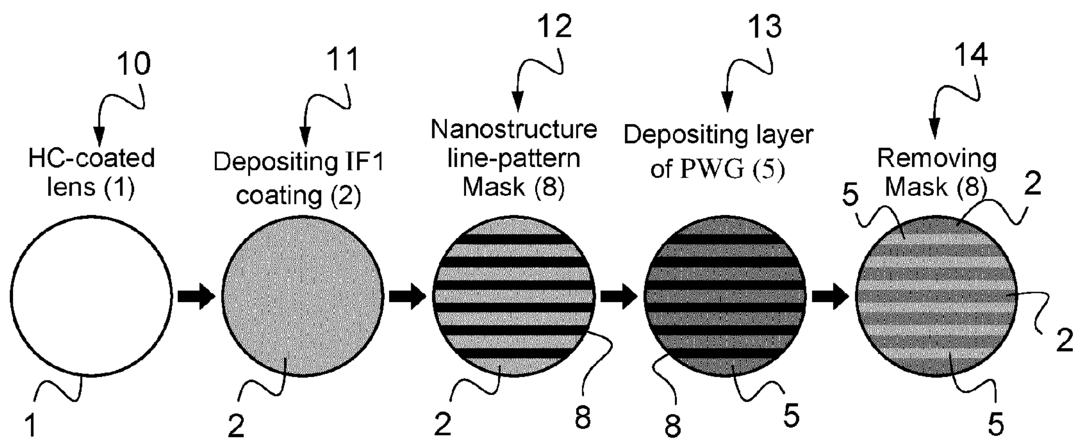

Fig.5

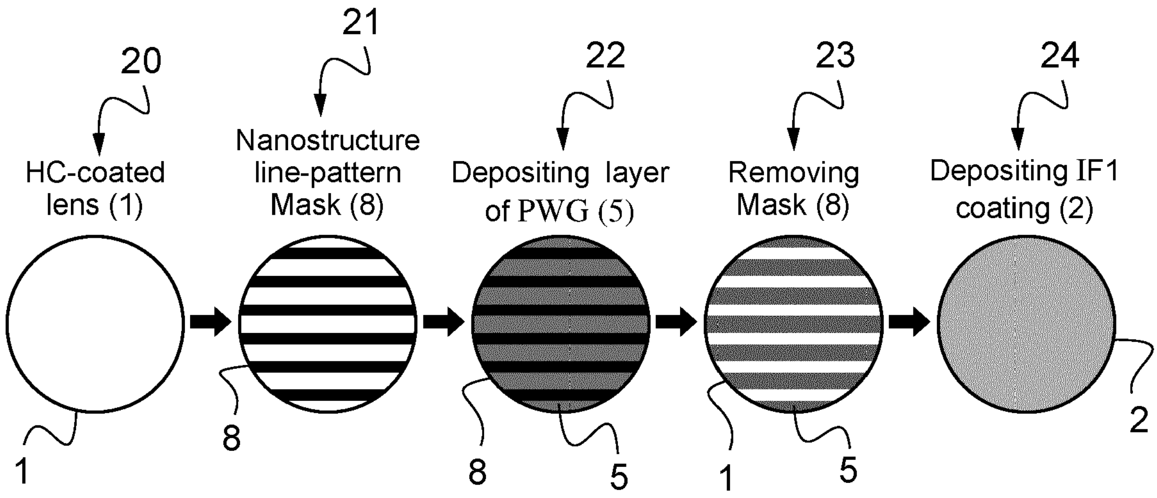
20
21
22
23
24
HC-coated lens (1)
Nanostructure line-pattern Mask (8)
Depositing layer of PWG (5)
Removing Mask (8)
Depositing IF1 coating (2)
1
8
8
5
1
5
2

Fig.6

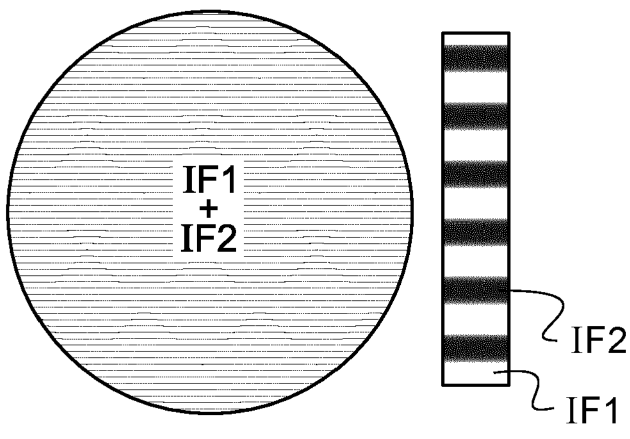
IF1
+
IF2
IF2
IF1

Europäisches Patentamt
European Patent Office
Office européen des brevets

# EUROPEAN SEARCH REPORT

Application Number
EP 24 30 5526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/008205 A1 (PERKINS RAYMOND T [US] ET AL) 12 January 2012 (2012-01-12)<br>* paragraphs [0002] - [0010], [0030] - [0053]; figures 1-9 * | 1-15 | INV.<br>G02B1/115<br>G02B5/30<br>G02C7/10<br>G02C7/12 |
| X | US 2021/231853 A1 (HIROYUKI HIROYUKI [JP] ET AL) 29 July 2021 (2021-07-29)<br>* paragraphs [0033] - [0079]; figures 1-4 * | 1-15 | |
| X | CN 108 469 645 B (UNIV ZHEJIANG)<br>26 January 2021 (2021-01-26)<br>* paragraphs [0091] - [0105]; figure 1 * | 1-15 | |
| X | WO 2023/069955 A1 (HOYA OPTICAL LABS OF AMERICA INC [US])<br>27 April 2023 (2023-04-27)<br>* paragraphs [0002] - [0013], [0057] - [0077], [0119]; figure 2 * | 1-15 | |
| A | US 6 251 297 B1 (KOMURO EIJU [GB] ET AL)<br>26 June 2001 (2001-06-26)<br>* column 6, line 51 - column 7, line 32; figures 1A-E * | 13-15 | TECHNICAL FIELDS SEARCHED (IPC)<br>G02B<br>G02C |

The present search report has been drawn up for all claims

1

| Place of search | Date of completion of the search | Examiner |
|---|---|---|
| Munich | 17 September 2024 | Burkart, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 30 5526

This annex lists the patent family members relating to the patent documents cited in the above-mentioned European search report. The members are as contained in the European Patent Office EDP file on
The European Patent Office is in no way liable for these particulars which are merely given for the purpose of information.

17-09-2024

| Patent document cited in search report | Publication date | Patent family member(s) | Publication date |
|---|---|---|---|
| US 2012008205 A1 | 12-01-2012 | AU 2005314134 A1 | 15-06-2006 |
| | | BR PI0518402 A2 | 18-11-2008 |
| | | CN 101073024 A | 14-11-2007 |
| | | EP 1820051 A1 | 22-08-2007 |
| | | EP 3570081 A1 | 20-11-2019 |
| | | JP 4843617 B2 | 21-12-2011 |
| | | JP 2008523422 A | 03-07-2008 |
| | | KR 20070092233 A | 12-09-2007 |
| | | US 2006119937 A1 | 08-06-2006 |
| | | US 2009168171 A1 | 02-07-2009 |
| | | US 2010328770 A1 | 30-12-2010 |
| | | US 2012008205 A1 | 12-01-2012 |
| | | WO 2006063049 A1 | 15-06-2006 |
| US 2021231853 A1 | 29-07-2021 | CN 113189690 A | 30-07-2021 |
| | | JP 7320461 B2 | 03-08-2023 |
| | | JP 2021117445 A | 10-08-2021 |
| | | US 2021231853 A1 | 29-07-2021 |
| CN 108469645 B | 26-01-2021 | NONE | |
| WO 2023069955 A1 | 27-04-2023 | CN 118159882 A | 07-06-2024 |
| | | EP 4419954 A1 | 28-08-2024 |
| | | WO 2023069955 A1 | 27-04-2023 |
| US 6251297 B1 | 26-06-2001 | JP 3372466 B2 | 04-02-2003 |
| | | JP H11183727 A | 09-07-1999 |
| | | US 6251297 B1 | 26-06-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 115903270
- FR 2702486
- EP 0614957 A
- US 4211823 A
- US 5015523 A
- JP 63141001 A
- JP 63087223 A
- EP 0404111 A
- US 5316791 A
- EP 0680492 A
- US 5081192 A
- US 5763061 A
- US 6183 A
- US 872 A
- US 5739 A
- US 639 A
- US 5922787 A
- US 6337235 B
- US 6277485 B
- EP 0933377 A

### Non-patent literature cited in the description

- Thin Film Processes. Thin Film Processes II. Academic Press, 1978